# FASCICULE DE BREVET EUROPEEN

(11) **EP 4 056 883 B1**
(45) Date de publication et mention de la délivrance du brevet: **08.11.2023**
(21) Numéro de dépôt: 22160793.0
(22) Date de dépôt: 08.03.2022
(51) Int. Cl.: F16L 37/32, F16L 37/22

(54) **ÉLÉMENT FEMELLE DE RACCORD RAPIDE, ET RACCORD RAPIDE COMPRENANT UN TEL ÉLÉMENT FEMELLE ET UN ÉLEMENT MÂLE ASSOCIÉ**
BUCHSE EINES SCHNELLANSCHLUSSES, UND SCHNELLANSCHLUSS, DER EINE SOLCHE BUCHSE UND EINEN ENTSPRECHENDEN STECKER UMFASST
FEMALE QUICK-CONNECTION ELEMENT AND QUICK CONNECTION INCLUDING SUCH A FEMALE ELEMENT AND AN ASSOCIATED MALE ELEMENT

(30) Priorité: 09.03.2021 FR 2102277
(43) Date de publication de la demande: 14.09.2022
(73) Titulaire: Staubli Faverges, 74210 Faverges-Seythenex (FR)
(72) Inventeur: PASTORE, Olivier, 73400 UGINE (FR); MARQUES BARROCA, Serafim, 73200 ALBERTVILLE (FR)
(74) Mandataire: Lavoix

(56) Documents cités:
- EP-A1- 1 557 599
- US-A1- 2007 278 791
- US-A1- 2018 180 208

## Description

La présente invention concerne un élément femelle de raccord rapide, ainsi qu'un raccord rapide comprenant un tel élément femelle et un élément mâle associé.

Le document US 2018/0180208 A montre un élément femelle de raccord rapide selon le préambule de la revendication 1.

Les raccords rapides sont des dispositifs de connexion fluidique comprenant un élément femelle et un élément mâle associé. Chacun des éléments mâle et femelle comprend un passage interne, les passages internes étant en communication fluidique lorsque le raccord est en configuration connectée. L'élément femelle comprend le plus souvent un dispositif de verrouillage, qui s'enclenche automatiquement lors de la connexion des éléments mâle et femelle, de manière à maintenir le raccord en configuration connectée, d'où le nom de raccord rapide.

Lorsque le fluide circulant dans le raccord rapide est sous-pression, cette pression tend à éloigner l'élément mâle de l'élément femelle, ce qui sollicite mécaniquement le dispositif de verrouillage. Pour améliorer la sécurité de la connexion et éviter les désaccouplements intempestifs, en particulier pour les raccords rapides à très haute pression, il est connu d'équiper les raccord rapides d'un organe de verrouillage sécurisé.

EP-A-1 557 599 décrit, par exemple, un élément femelle de raccord rapide équipé d'un dispositif de verrouillage sécurisé. L'élément femelle comprend des billes de verrouillage, qui sont repoussées par une bague de manoeuvre dans une première position, dans laquelle les billes coopèrent avec une gorge périphérique de l'élément mâle. La bague de manoeuvre, qui est elle-même repoussée dans sa position de verrouillage par un premier ressort, est aussi bloquée dans sa position de verrouillage par un deuxième verrou, chargé par un deuxième ressort. Il faut donc, pour déconnecter les éléments mâle et femelle, tout d'abord libérer le deuxième verrou pour éloigner la bague de manoeuvre de sa position de verrouillage et ensuite libérer les billes de verrouillage. Un tel dispositif de verrouillage sécurisé est encombrant et relativement complexe à fabriquer, et donc coûteux.

C'est à ces problèmes qu'entend plus particulièrement remédier l'invention, en proposant un élément femelle de raccord rapide qui offre une sécurité améliorée contre les déconnexions intempestives, tout en restant compact et simple à fabriquer.

À cet effet, l'invention concerne un élément femelle de raccord rapide configuré pour se connecter à un élément mâle, l'élément femelle comprenant :
- un corps, qui s'étend selon un axe d'emmanchement et qui comprend :
   - un volume de réception de l'élément mâle, le volume de réception présentant une forme de révolution autour de l'axe d'emmanchement et débouchant du corps par une première embouchure, qui est située dans un plan transversal orthogonal à l'axe d'emmanchement, l'embouchure définissant un côté avant de l'élément femelle,
   - des ouvertures radiales, qui sont ménagées dans le corps selon un axe radial orthogonal à l'axe d'emmanchement et qui débouchent dans le volume de réception,
- au moins un verrou, chaque verrou étant reçu dans une ouverture radiale respective et étant mobile en translation par rapport au corps suivant l'axe radial correspondant, entre une première position, dans laquelle ce verrou pénètre dans le volume de réception, et une deuxième position, dans laquelle ce verrou ne pénètre pas dans le volume de réception, chaque verrou comprenant une face proximale orientée du côté opposé à la première embouchure,
- une bague de manoeuvre, disposée autour du corps co-axialement à l'axe d'emmanchement et mobile en translation par rapport au corps le long de l'axe d'emmanchement, entre une position de verrouillage et une position de déverrouillage,
- un organe de rappel, configuré pour rappeler la bague de manoeuvre vers sa position de verrouillage.

Selon l'invention, la bague de manoeuvre comprend des rainures de guidages qui coopèrent avec des pions de chaque verrou s'étendant suivant une direction orthogonale à l'axe radial de l'ouverture radiale correspondante, les rainures de guidage associées à chaque verrou étant géométriquement portées par un plan de guidage incliné par rapport à l'axe d'emmanchement, de manière que :
- chaque verrou est entrainé de sa deuxième position vers sa première position lorsque la bague de manoeuvre est déplacée de sa position de déverrouillage vers sa position de verrouillage, et
- chaque verrou est entrainé de sa première position vers sa deuxième position lorsque la bague de manoeuvre est déplacée de sa position de verrouillage vers sa position de déverrouillage.

Grâce à l'invention, le verrou est ramené dans sa première position grâce à l'organe de rappel de la bague de manoeuvre vers sa position de verrouillage. Le raccord rapide reste ainsi compact et économique. Lorsque le raccord rapide est connecté et sous pression, les efforts de répulsion tendant à désaccoupler le raccord s'appliquent sur les verrous et sont entièrement repris sur les parois des ouvertures radiales, ce qui réduit les risques de désaccouplement intempestif.

Selon des aspects avantageux mais non obligatoires de l'invention, un tel élément femelle peut incorporer une ou plusieurs des caractéristiques suivantes prises isolément ou selon toute combinaison techniquement admissible :
- les rainures de guidage s'éloignent de l'axe d'emmanchement à mesure qu'elles se rapprochent de l'avant de l'élément femelle, la position de déverrouillage de la bague de manoeuvre étant une position axialement reculée, le long de l'axe d'emmanchement, par rapport à la position de verrouillage.
- Les rainures de guidage se rapprochent de l'axe d'emmanchement à mesure qu'elles se rapprochent de l'avant de l'élément femelle, la position de verrouillage de la bague de manoeuvre étant une position axialement reculée, le long de l'axe d'emmanchement, par rapport à la position de déverrouillage.
- Chaque plan de guidage est incliné par rapport à l'axe d'emmanchement d'un angle d'inclinaison compris entre 30° et 60°, de préférence compris entre 40° à 50°, de préférence encore égal à 45°.
- La face proximale de chaque verrou est essentiellement plane et parallèle à un plan transversal, la face proximale étant en appui surfacique sur une face arrière de l'ouverture radiale correspondante.
- Une largeur de la face proximale de chaque verrou, égale à la longueur de la projection sur le plan transversal de la face proximale de ce verrou, mesurée suivant une direction orthoradiale à l'axe d'emmanchement, est supérieure à un rayon de l'embouchure.
- Chaque verrou comprend une face interne, orientée vers l'axe d'emmanchement, comprenant une portion évasée orientée à la fois vers l'axe d'emmanchement A100 et vers l'embouchure.

L'invention concerne également un raccord rapide, comprenant un élément femelle tel que défini précédemment, et un élément mâle configuré pour être connecté à cet élément femelle, dans lequel :
- l'élément mâle comprend un corps creux avec une forme globalement de révolution autour d'un axe principal, le corps creux comprenant une portion distale qui est destinée à être reçue dans le volume de réception de l'élément femelle, le corps de l'élément mâle délimitant un passage fluidique, qui débouche de la portion distale par une deuxième embouchure, la deuxième embouchure définissant un côté avant de l'élément mâle,
- la portion distale comprend, à mesure que l'on s'éloigne de la deuxième embouchure, une première portion cylindrique, une portion évasée, notamment conique, et une deuxième portion cylindrique, la portion évasée étant ménagée en saillie par rapport à la première portion cylindrique et à la deuxième portion cylindrique,
- la portion évasée forme une collerette avec une face avant et une face arrière, parmi lesquelles :
   - la face avant est orientée vers la deuxième embouchure et diverge à mesure que l'on s'éloigne de la deuxième embouchure, la face avant étant configurée pour repousser chaque verrou de sa première position vers sa deuxième position lorsque l'élément mâle pénètre dans l'élément femelle, au cours d'un mouvement d'emmanchement de l'élément mâle dans le volume de réception de l'élément femelle,
   - la face arrière, relie la face avant à la deuxième portion cylindrique et est orientée à l'opposé de la deuxième embouchure,
- lorsque le raccord rapide est dans une configuration connectée, dans laquelle l'élément mâle est reçu dans le volume de réception de l'élément femelle, l'axe d'emmanchement est confondu avec l'axe principal, la bague de manoeuvre est en position de verrouillage et chaque verrou est dans sa première position, la face arrière de la collerette est en regard de la face proximale de chaque verrou.

Selon des aspects avantageux mais non obligatoires de l'invention, un tel raccord rapide peut incorporer une ou plusieurs des caractéristiques suivantes prises isolément ou selon toute combinaison techniquement admissible :
- la face arrière de la collerette comprend une première portion externe et une première portion interne, qui est radialement plus proche de l'axe principal que la première portion externe et qui relie la portion externe à la deuxième portion cylindrique,
- la première portion externe définit une première face externe de forme annulaire centrée sur l'axe principal et située dans un plan orthogonal à l'axe principal,
- la première portion interne comprend une première rainure, qui est ménagée en creux dans la première portion interne et qui comprend un fond et deux bords radiaux en regard l'un de l'autre,
- le fond de la première rainure définit une première face interne, de forme annulaire centrée sur l'axe principal et située dans un plan orthogonal à l'axe principal,
- celui des deux bords radiaux qui relie la première face interne et la première face externe définit une première face de sûreté, qui est géométriquement portée par un cylindre de section circulaire centré sur l'axe principal et qui est orientée vers l'axe principal,
- la face proximale de chaque verrou présente un profil complémentaire de la face arrière de la collerette et comprend une deuxième face externe, une deuxième face interne et une deuxième face de sûreté, parmi lesquelles :
   ∘ la deuxième face externe présente une forme de portion d'anneau centré sur l'axe d'emmanchement et situé dans un plan orthogonal à l'axe d'emmanchement,
   ∘ la deuxième face interne est située dans un plan orthogonal à l'axe d'emmanchement et en retrait de la deuxième face externe par rapport à l'embouchure de l'élément femelle,
   ∘ la deuxième face de sûreté est située entre la deuxième face externe et la deuxième face interne et est orientée à l'opposé de l'axe d'emmanchement,
- lorsque le raccord rapide est dans sa configuration connectée :
   ∘ la première face externe est en regard de la deuxième face externe,
   ∘ la première face interne est en regard de la deuxième face interne,
   ∘ lorsque l'une parmi la première face externe ou la première face interne est en appui sur, respectivement, la deuxième face externe ou sur la deuxième face interne située en regard, alors la première face de sûreté est en regard de la deuxième face de sûreté, empêchant les verrous de passer de leur première position vers leur deuxième position.
- Pour chaque verrou, une deuxième rainure est ménagée en creux dans la deuxième portion interne de la face proximale, la deuxième rainure comprenant un fond et deux bords radiaux situés en regard l'un de l'autre, le fond de la rainure présentant une forme de portion d'anneau centrée sur l'axe d'emmanchement lorsque le verrou est en première position, tandis que les deux bords présentent chacun une forme de portion de cylindre de section circulaire centrée sur un axe parallèle à l'axe d'emmanchement, alors que le fond définit la deuxième face interne, tandis que celui des deux bords radiaux qui est orienté à l'opposé de l'axe d'emmanchement définit la deuxième face de sûreté, et que lorsque le raccord rapide est dans une configuration connectée, la deuxième face externe est en appui sur la première face externe.
- Pour chaque verrou, une deuxième rainure est ménagée en creux dans la deuxième portion interne de la face proximale, la deuxième rainure comprenant un fond et deux bords radiaux situés en regard l'un de l'autre, le fond de la rainure présentant une forme de portion d'anneau centrée sur l'axe d'emmanchement lorsque le verrou est en première position, tandis que les deux bords présentent chacun une forme de portion de cylindre de section circulaire centrée sur un axe parallèle à l'axe d'emmanchement, alors que le fond définissant la deuxième face interne, tandis que celui des deux bords radiaux qui est orienté à l'opposé de l'axe d'emmanchement définit une deuxième face de sûreté, et que lorsque le raccord rapide est dans une configuration connectée, la deuxième face interne est en appui sur la première face interne.
- Pour chaque verrou, un insert est situé dans la deuxième portion interne de la face proximale du verrou, l'insert formant saillie par rapport à la deuxième portion externe, alors que l'insert présente une face latérale, orientée à l'opposé de l'axe d'emmanchement, et une face arrière, orienté du côté opposé de l'embouchure de l'élément femelle, et que la face latérale de l'insert est la deuxième face de sûreté du verrou, tandis que la face arrière de l'insert est la deuxième face interne du verrou.

L'invention sera mieux comprise, et d'autres avantages de celle-ci apparaîtront plus clairement à la lumière de la description qui va suivre, de quatre modes de réalisation d'un élément femelle de raccord rapide, ainsi que d'un raccord rapide comprenant un tel élément femelle et un élément mâle associé, conformes à son principe, donnée uniquement à titre d'exemple et faite en référence aux dessins annexés, dans lesquels :
- [Fig 1] la figure 1 est une coupe longitudinale d'un raccord rapide, conforme à un premier mode de réalisation de l'invention, comprenant un élément femelle et un élément mâle associé, représentés dans une première configuration dite déconnectée ;

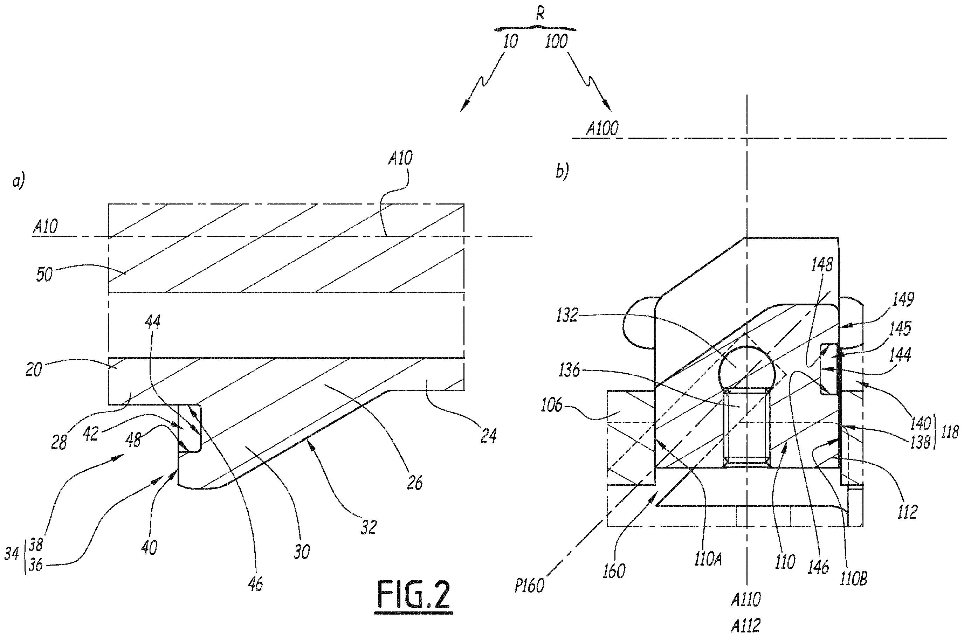

- [Fig 2] La figure 2 représente, sur deux inserts a) et b), respectivement un détail Il a) de l'élément mâle du raccord rapide de la figure 1 et un détail Il b) de l'élément femelle du raccord rapide de la figure 1 ;
- [Fig 3] la figure 3 est une coupe longitudinale du raccord rapide de la figure 1 dans une deuxième configuration dite de pré-verrouillage ;
- [Fig 4] la figure 4 est une coupe longitudinale du raccord rapide de la figure 1 dans une troisième configuration dite connectée ;

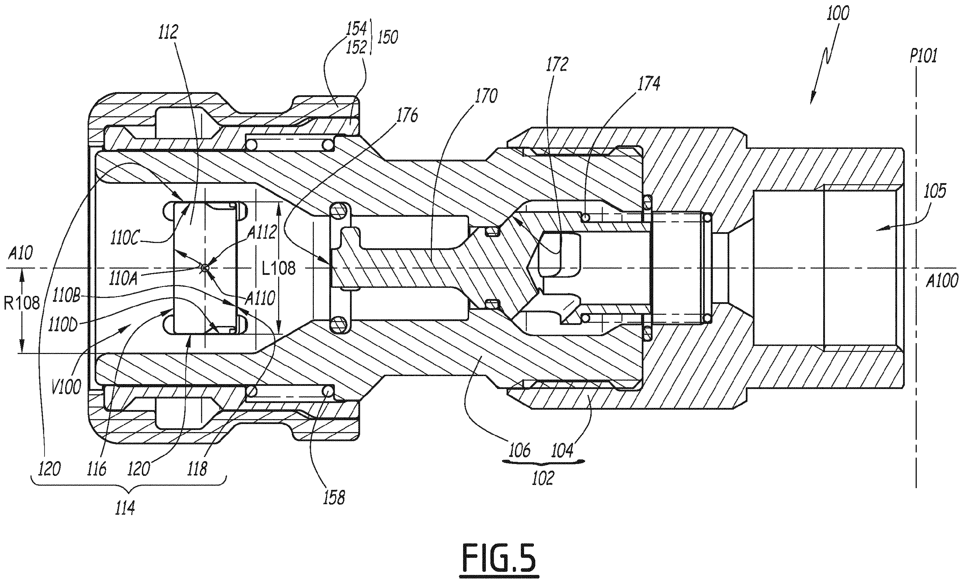

- [Fig 5] la figure 5 est une coupe longitudinale à plus grande échelle de l'élément femelle du raccord des figures 1 à 4, représenté en configuration connectée et selon un plan de coupe V-V orthogonal à celui de la figure 1 et visible sur cette figure ;
- [Fig 6] la figure 6 est une coupe transversale, selon le plan VI à la figure 1, de l'élément femelle de la figure 1 ;
- [Fig 7] la figure 7 est une vue en perspective éclatée de deux pièces de l'élément femelle des figures 5 et 6 ;
- [Fig 8] la figure 8 est une vue en perspective éclatée des pièces de la figure 7, selon un angle de vue différent ;
- [Fig 9] la figure 9 est une coupe longitudinale d'un élément femelle conforme à un deuxième mode de réalisation de l'invention, représenté en configuration déconnectée, selon un plan de coupe analogue à celui de la figure 1 ;
- [Fig 10] la figure 10 est une coupe longitudinale d'un raccord rapide conforme au deuxième mode de réalisation de l'invention, comprenant l'élément femelle de la figure 9 et représenté en configuration de pré-verrouillage ;
- [Fig 11] la figure 11 est une coupe longitudinale du raccord rapide de la figure 10, le raccord étant en configuration connectée ;
- [Fig 12] la figure 12 est une coupe longitudinale représentant à plus grande échelle un détail d'un raccord rapide conforme à un troisième mode de réalisation de l'invention, le raccord étant en configuration connectée ;
- [Fig 13] la figure 13 est une vue analogue à la figure 12 d'un raccord rapide conforme à un quatrième mode de réalisation de l'invention, et
- [Fig 14] la figure 14 est une vue en perspective représentant, sous deux angles différents, une pièce du raccord rapide de la figure 13.

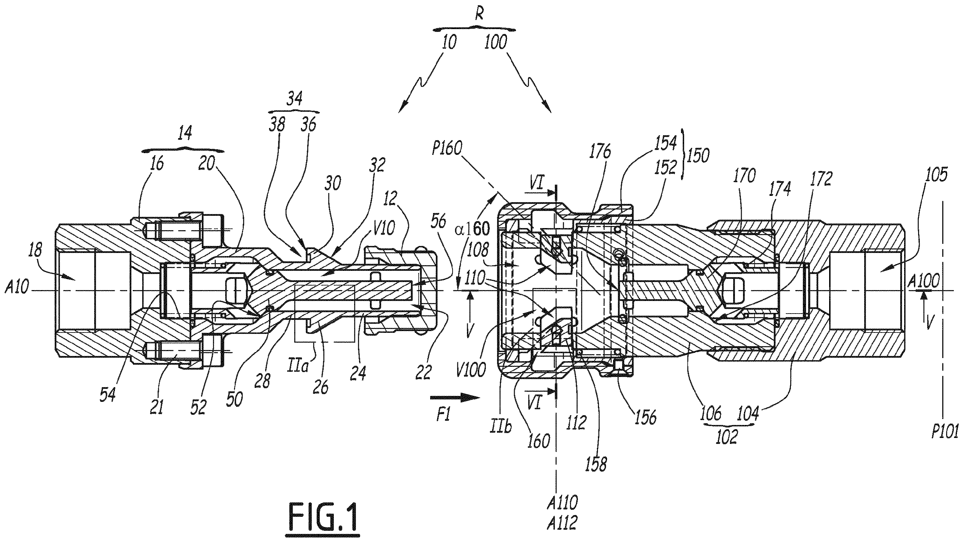

La figure 1 représente un raccord R, qui comprend un élément mâle 10, sur la gauche de la figure 1, et un élément femelle 100 associé, sur la droite de la figure 1.

Le raccord R est ici représenté dans une configuration déconnectée, dans laquelle l'élément mâle 10 et l'élément femelle 100 sont séparés l'un de l'autre. L'élément mâle 10 est en outre ici obturé par un capuchon 12, qui ne fait pas partie de l'invention et qui est enlevé lors de la connexion de l'élément mâle 10 avec l'élément femelle 100.

On décrit tout d'abord l'élément mâle 10.

L'élément mâle 10 comprend un corps 14, qui est creux et présente une forme globalement de révolution autour d'un axe principal A10. Le corps 14 est ici réalisé en deux parties, avec une portion proximale 16, dans laquelle est ici ménagé un trou taraudé 18 permettant de fixer une conduite de fluide à l'élément mâle 10, et une portion distale 20, qui est destinée à être en partie reçue dans un volume de réception de l'élément femelle 100. La portion proximale 16 est ici assemblée à la portion distale 20 au moyen de vis 21.

Le corps 14 de l'élément mâle 10 délimite un passage fluidique V10, qui débouche de la portion distale 20 par une embouchure 22. Dans la configuration déconnectée de la figure 1, l'embouchure 22 est obturée par le capuchon 12.

Dans la configuration déconnectée de la figure 1, l'embouchure 22 de l'élément mâle 10 est orientée vers l'élément femelle 100. Par convention, l'embouchure 22 de l'élément mâle 10 est située sur un côté avant de l'élément mâle 10, tandis que le trou taraudé 18 est situé sur un côté arrière de l'élément mâle 10.

La portion distale 20 comprend, à mesure que l'on s'éloigne de l'embouchure 22 vers l'arrière de l'élément mâle 10, une première portion cylindrique 24, une portion évasée 26 et une deuxième portion cylindrique 28.

La première portion cylindrique 24 et la deuxième portion cylindrique 28 présentent chacune une section circulaire centrée sur l'axe principal A10. La portion évasée 26, située entre la première portion cylindrique 24 et la deuxième portion cylindrique 28, est ménagée en saillie radialement vers l'extérieure de la portion distale, à la fois par rapport à la première portion cylindrique 24 et par rapport à la deuxième portion cylindrique 28. La portion évasée 26 forme une collerette 30, qui est représentée à plus grande échelle sur l'insert a) de la figure 1. La collerette 30 comprend une face avant 32, qui est orientée vers la deuxième embouchure 22, et une face arrière 34, qui relie la face avant 32 à la deuxième portion cylindrique 28 et qui est orientée à l'opposé de l'embouchure 22, c'est-à-dire orientée vers l'arrière de l'élément mâle 10.

La face avant 32 diverge à mesure que l'on s'éloigne de l'embouchure 22 et présente ici un profil tronconique, centré sur l'axe principal A10. La face arrière 34 comprend une première portion externe 36 et une première portion interne 38, la première portion interne 38 étant radialement plus proche de l'axe principal A10 que la première portion externe 36. Autrement dit, la première portion interne 38 relie la première portion externe 36 à la deuxième portion cylindrique 28.

La première portion externe 36 définit une première face externe 40, de forme annulaire centrée sur l'axe principal A10 et située dans un plan orthogonal à l'axe principal A10.

La première portion interne 38 comprend une première rainure 42, qui est ménagée en creux dans la première portion interne 38. La première rainure 42 présente ici, dans un plan radial à l'axe principal A10, un profil rectangulaire et comprend un fond 44 et deux bords respectivement radial interne 46 et radial externe 48 en regard l'un de l'autre.

Les bords radiaux 46 et 48 présentent chacun une forme cylindrique de section circulaire centrée sur l'axe principal A10, un rayon du bord radial interne 46 étant inférieur à un rayon du bord radial externe 48. Dans l'exemple, le rayon du bord interne 46 est égal à un rayon externe de la deuxième portion cylindrique 28.

Le fond 44 de la première rainure 42 définit une deuxième face interne, de forme annulaire centrée sur l'axe principal A10 et située dans un plan orthogonal à l'axe principal A10.

Le bord radial externe 48 relie la première face externe 40 et le fond 44 et définit une première face de sûreté. La première face de sûreté est géométriquement portée par un cylindre de section circulaire centré sur l'axe principal A10 et est orientée vers l'axe principal A10.

L'élément mâle 10 comprend avantageusement une soupape 50, qui est logée dans le passage fluidique V10. La soupape 50 est mobile en translation selon l'axe principal A10 entre une position de fermeture, dans laquelle la soupape 50 est en butée contre un siège 52 ménagé dans le corps 14 de l'élément mâle 10 et obture le passage fluidique V10, et une position d'ouverture, dans laquelle la soupape 50 n'obture pas le passage fluidique V10. Sur la figure 1, la soupape 50 est représentée en position de fermeture.

L'élément mâle 10 comprend aussi un ressort 54, qui agit entre une face arrière de la soupape 50 et une face du corps 14 située en regard et tournée vers l'avant. Le ressort 54 rappelle par défaut la soupape 50 vers sa position de fermeture.

La soupape 50 comprend, du côté de l'embouchure 22, une première face d'appui 56. La soupape 50 est ainsi configurée pour passer de sa position de fermeture à sa position d'ouverture, lorsqu'un effort supérieur à l'effort de rappel du ressort 54 est exercé sur la première face d'appui 56.

On décrit à présent l'élément femelle 100 du raccord rapide R.

L'élément femelle 100 comprend un corps 102, qui présente une forme globalement de révolution autour d'un axe d'emmanchement A100. Le corps 102 est ici réalisé en deux parties et comprend une partie proximale 104, dans laquelle est ménagé un trou taraudé 105 permettant de fixer une conduite de fluide, et une partie distale 106 qui est ici assemblée à la partie proximale par vissage.

Le corps 102 de l'élément femelle 100 est creux et délimite un passage fluidique V100, qui débouche de la portion distale 106 par une embouchure 108, qui définit un côté avant de l'élément femelle 100. L'embouchure 108 présente une forme circulaire avec un rayon R108. L'embouchure 108 est ici située dans un plan transversal, c'est-à-dire un plan orthogonal à l'axe d'emmanchement A100. Lors de l'emmanchement de l'élément femelle 100 et de l'élément mâle 10, la portion distale 20 de l'élément mâle 10 passe par l'embouchure 108 et est reçue dans une portion avant du passage fluidique V100. Le passage fluidique V100 est donc aussi un volume de réception partielle de l'élément mâle 10.

La partie distale 106 du corps 102 comprend deux ouvertures radiales 110, qui sont ménagées dans le corps 102 radialement à l'axe d'emmanchement A100 et qui débouchent dans le volume de réception V100. Chaque ouverture radiale 110 est centrée sur un axe radial A110 qui lui est propre, chaque axe radial A110 étant un axe orthogonal à l'axe d'emmanchement A100. Dans l'exemple illustré, les deux ouvertures radiales 110 sont diamétralement opposées l'une par rapport à l'autre autour de l'axe d'emmanchement A100, ce qui fait que les deux axes radiaux A110 sont alignés. Les axes radiaux A110 sont situés dans le plan de coupe de la figure 1.

Dans l'exemple illustré, chaque ouverture radiale 110 présente, dans un plan orthogonal à l'axe radial A110 correspondant, une section rectangulaire. Chaque ouverture 110 comprend une face avant 110A, qui est portée par un plan orthogonal à l'axe A100 et qui est orientée vers l'arrière de l'élément femelle 100, une face arrière 110B, qui est parallèle à, et située en regard de, la face avant 110A, ainsi que deux faces latérales 110C et 110D, qui sont agencées en regard l'une de l'autre et qui sont chacune portées par un plan parallèle à l'axe d'emmanchement A110. Autrement dit, chaque ouverture radiale 110 présente des parois qui sont parallèles à l'axe radial A110 correspondant.

Chaque ouverture radiale 110 reçoit un verrou 112, chaque verrou 112 étant mobile en translation par rapport au corps 102 de l'élément femelle 100 suivant une direction parallèle à l'axe radial A110 de l'ouverture radiale 110 dans laquelle ce verrou 112 est reçu.

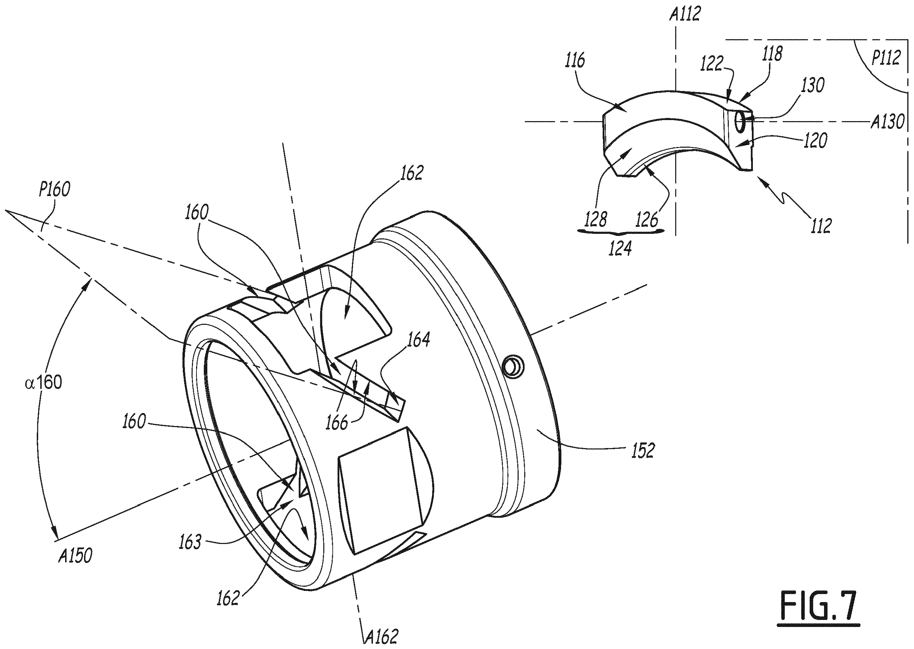

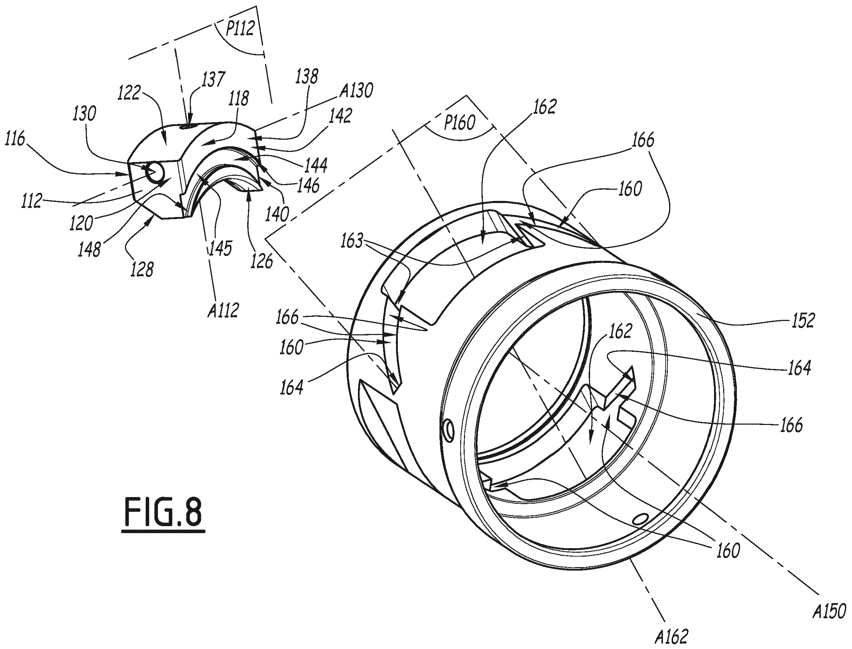

Un verrou 112 est représenté isolé sur les figures 7 et 8.

Chaque verrou 112 présente une surface périphérique 114 centrée sur un axe de verrou A112. Lorsqu'un verrou 112 est reçu dans une des ouvertures radiales 110, l'axe de verrou A112 de ce verrou est confondu avec l'axe radial A110 de l'ouverture radiale 110 correspondante. La surface périphérique 114 est configurée pour coopérer avec les parois de l'ouverture radiale 110, de manière à guider le verrou 112 reçu dans l'ouverture radiale 110 correspondante.

Dans l'exemple, la surface périphérique 114 présente donc, en section dans un plan orthogonal à l'axe de verrou A112, un profil rectangulaire. La surface périphérique 114 comprend une face distale 116, qui est orientée vers l'embouchure 108 lorsque le verrou 112 est reçu dans une des ouvertures radiales 110, une face proximale 118, qui est orientée à l'opposé de la face avant et donc orientée du côté opposé de l'embouchure 108, la face distale 116 et la face proximale 118 étant reliées l'une à l'autre par deux faces latérales 120.

Les faces distale 116, proximale 118 et latérales 120 sont préférentiellement planes. Par commodité, on définit un plan transversal P112 du verrou 112 comme étant un plan parallèle à la face proximale 118 et contenant l'axe A112.

Autrement dit, le plan transversal P112 est orthogonal à l'axe d'emmanchement A100 lorsque le verrou 112 est reçu dans l'ouverture radiale 110 correspondante.

On définit aussi un plan transversal P101 de l'élément femelle 100 comme étant un plan orthogonal à l'axe d'emmanchement A100.

Lorsque le verrou 112 est reçu dans une ouverture radiale 110, la face distale 116 et la face proximale 118 du verrou 112 sont orthogonales à l'axe d'emmanchement A100, autrement dit sont parallèles au plan transversal P101 de l'élément femelle 100, tandis que les faces latérales 120 sont parallèles à l'axe d'emmanchement A100.

En particulier, la face proximale 118 du verrou 112 est configurée pour être en appui surfacique contre la face arrière 110B de l'ouverture 110, ce qui permet une bonne transmission des efforts et permet de réaliser un élément femelle 100 compact dans le sens axial parallèlement à l'axe d'emmanchement A100.

Pour chaque verrou 112, on définit une largeur L118 de la face proximale 118 comme étant une longueur, mesurée suivant une direction perpendiculaire à l'axe du verrou A112, de la projection de la face proximale 118 sur le plan transversal P101. Autrement dit, lorsque le verrou 112 est reçu dans l'ouverture radiale 110 correspondante, la largeur L118 est mesurée selon une direction orthogonale à l'axe radial A110 correspondant, c'est-à-dire selon une direction orthoradiale à l'axe d'emmanchement A100.

La largeur L118 de chaque verrou 112 est avantageusement choisie supérieure au rayon R108 de l'embouchure 108, de manière à garantir une surface de contact importante entre le verrou 112 et la collerette 30 de l'élément mâle 10.

Chaque verrou 112 comprend aussi une face externe 122 et une face interne 124, orientées à l'opposé de la face externe 122 selon l'axe de verrou A112.

La face externe 122 est ici une portion de cylindre de section circulaire centrée sur un axe orthogonal au plan transversal P112 du verrou 112. Lorsque l'élément femelle 100 est assemblé, la face externe 122 est orientée à l'opposé de l'axe d'emmanchement A100 et la face interne 124 est orientée vers l'axe d'emmanchement A100.

La face interne 124 comprend une portion cylindrique 126 et une portion évasée 128. La portion cylindrique 126 est une portion de cylindre de section circulaire centré sur un axe orthogonal au plan transversal P112, tandis que la portion évasée 128 est ici une portion de cône centrée sur un axe orthogonal au plan transversal P112. En configuration assemblée de l'élément femelle 100, la portion évasée 128 est orientée à la fois vers l'axe d'emmanchement A100 et vers l'embouchure 108 de l'élément femelle 100.

La portion évasée 128 est configurée pour coopérer avec la face avant 32 de la collerette 30 de l'élément mâle, lors de la connexion de l'élément mâle 10 et de l'élément femelle 100, comme décrit plus loin.

Un alésage traversant 130 est ménagé au travers de chaque verrou 112, l'alésage 130 débouchant sur chacune des faces latérales 120 du verrou. L'alésage 130 est centré sur un axe A130, qui est parallèle au plan transversal P112 et orthogonal à l'axe de verrou A112. Autrement dit, en configuration assemblée de l'élément femelle 100, l'axe A130 de l'alésage 130 est orthoradial à l'axe d'emmanchement A100.

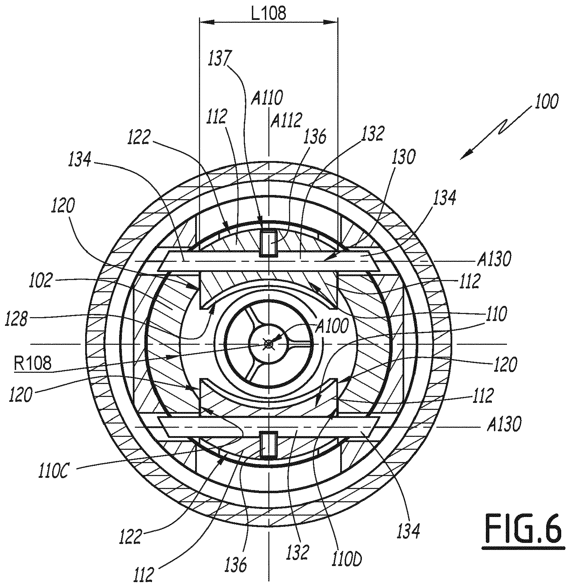

Chaque verrou 112 comprend une tige 132, qui n'est pas représentée aux figures 7 ou 8. La tige 132 est reçue dans l'alésage 130 et dépasse de chacune des faces latérales 120, de manière à former deux pions de guidage 134. La tige 132 est maintenue dans l'alésage 130 au moyen d'une vis de pression 136 insérée dans un taraudage 137 qui débouche sur la face externe 122. Comme visible à la figure 6, chaque pion 134 présente une extrémité biseautée, pour réduire les risques d'interaction avec les autres éléments du raccord femelle lors des mouvements du verrou 112. Lorsque l'élément femelle 100 est assemblé, les pions 134 de chaque verrou 112 s'étendent ainsi suivant la direction de l'axe A130 de l'alésage 130, autrement dit suivant une direction orthogonale à l'axe radial A110 de l'ouverture radiale 110 correspondante.

La face proximale 118 de chaque verrou 112 présente un profil complémentaire de la face arrière 34 de la collerette 30. La face proximale 118 comprend ainsi une deuxième portion externe 138 et une deuxième portion interne 140, la deuxième portion interne 140 étant radialement plus proche de l'axe d'emmanchement A100 que la deuxième portion externe 138 lorsque l'élément femelle 100 est assemblé.

La deuxième portion interne 140 comprend une deuxième face externe 144, qui est ici un fond d'une deuxième rainure 145, ménagée en creux dans la face proximale 118. Le fond de la deuxième rainure 145 est situé entre une première face axiale externe 146 et une deuxième face axiale interne 148, qui sont en regard l'une de l'autre.

La deuxième face externe 144 présente ici une forme annulaire centrée sur l'axe d'emmanchement A100 lorsque le verrou 112 est dans sa première position. La deuxième face externe 144 est parallèle au plan transversal P112 et est située en retrait par rapport à la face proximale 118.

La deuxième face externe 144 est ici reliée à la face proximale 118 par la première face axiale externe 146. La première face axiale externe 146, qui est ici une portion de cylindre de section circulaire centrée sur l'axe d'emmanchement A100 en configuration assemblée de l'élément femelle 100, est orientée vers l'axe d'emmanchement A100.

La deuxième face axiale 148, qui présente ici une forme de cylindre de section circulaire centrée sur l'axe d'emmanchement A100, est orientée à l'opposé de l'axe d'emmanchement A100 lorsque l'élément femelle 100 est en configuration assemblée.

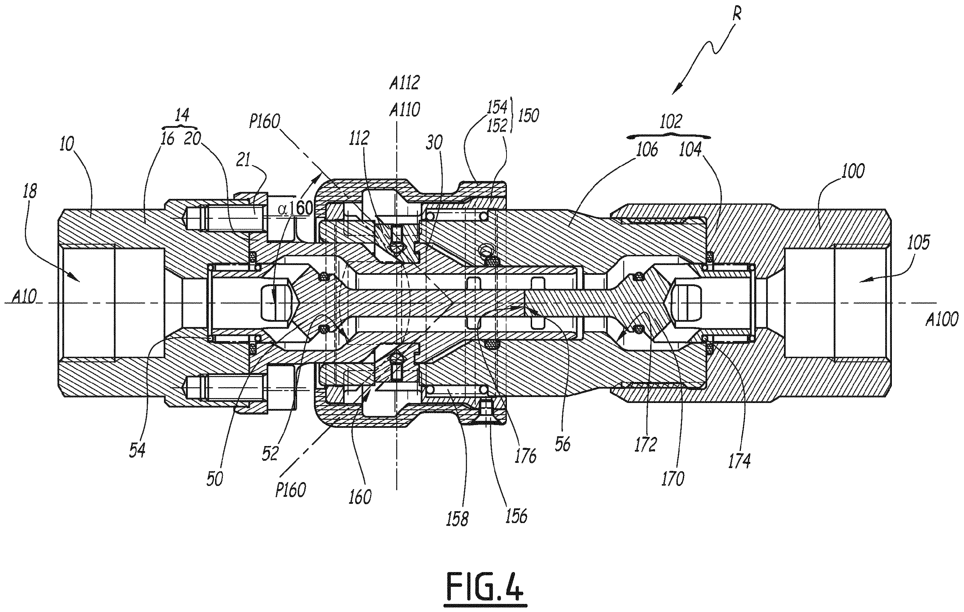

La deuxième face axiale 148 est configurée pour être en regard de la première face de sûreté 48 de l'élément mâle 10 lorsque l'élément mâle 10 est reçu dans le volume de réception V100 de l'élément femelle 100 et que le raccord rapide est dans une configuration verrouillée, telle qu'illustrée sur la figure 4 et décrite plus loin. Par extension, la deuxième face axiale 148 est une deuxième face de sûreté pour le verrou 112.

La deuxième portion interne 140 comprend aussi une deuxième face interne 149, qui est parallèle au plan transversal P112 et qui relie la deuxième face axiale 148 à la face interne 124 du verrou 112. La deuxième face interne 149 est plus éloignée de l'embouchure 108 de l'élément femelle 100 que la deuxième face externe 144.

Chaque verrou 112 est reçu dans une ouverture radiale 110 respective et est mobile en translation par rapport au corps 102 de l'élément femelle 100 suivant l'axe radial A110 correspondant, entre une première position, dans laquelle ce verrou 112 pénètre dans le volume de réception V100, et une deuxième position, dans laquelle ce verrou 112 ne pénètre pas dans le volume de réception V100.

Les mouvements de chacun des verrous 112 sont commandés par une bague de manoeuvre 150, qui appartient à l'élément femelle 100.

La bague de manoeuvre 150 présente une forme globalement de révolution autour d'un axe de bague A150. En configuration assemblée de l'élément femelle 100, la bague de manoeuvre 150 est disposée autour du corps 102 coaxialement à l'axe d'emmanchement A100, c'est-à-dire que l'axe de bague A150 est confondu avec l'axe d'emmanchement A100.

La bague de manoeuvre 150 est ici formée d'un assemblage d'une bague intérieure 152 et d'une bague extérieure 154. La bague intérieure 152 et la bague extérieure 154 sont solidarisées l'une à l'autre, ici au moyen de vis 156.

La bague de manoeuvre 150 est mobile en translation par rapport au corps 102 de l'élément femelle 100 le long de l'axe d'emmanchement A100, entre une position avant et une position arrière. Ici, la bague de manoeuvre 150 est ramenée par défaut vers l'avant de l'élément femelle 100 par un ressort de compression 158, qui agit entre deux faces opposées de la bague de manoeuvre 150 et du corps 102.

La bague intérieure 152 est représentée indépendamment de la bague extérieure sur les figures 7 et 8. La bague intérieure 152 comprend des rainures de guidage 160, qui coopèrent avec chaque verrou 112 de manière à guider les mouvements de chaque verrou entre sa première position et sa deuxième position lorsque la bague de manoeuvre 150 est déplacée entre sa position avant et sa position arrière.

Pour chaque verrou 112, la bague intérieure 152 comprend aussi un passage radial 162, chaque passage radial 162 étant centré sur un axe de passage A162, qui est radial à l'axe de bague A150, chaque passage radial 162 présentant, dans un plan orthogonal à l'axe de passage A162, une section sensiblement rectangulaire.

Chaque passage radial 162 est configuré pour recevoir un verrou 112 respectif, sans interférer avec les mouvements du verrou lorsque la bague de manoeuvre 150 est déplacée entre sa position avant et sa position arrière, et que le verrou 112 est déplacé entre sa première position et sa deuxième position.

Dans l'exemple illustré, deux rainures de guidage 160 sont associées à chaque passage radial 162, ces deux rainures de guidage 160 débouchant par une ouverture 163 dans le passage radial 162, tandis qu'une autre extrémité opposée est un fond 164 de cette rainure de guidage 160.

Chaque rainure 160 comprend deux parois 166 situées en regard l'une de l'autre qui sont reliées par le fond 164. Les parois 166 sont ici parallèles entre elles, une distance entre les parois 166 étant légèrement plus grande qu'un diamètre des pions 134 des verrous 112, de manière à guider les pions 134 dans les rainures de guidage 160.

Les rainures de guidage 160 associées à un passage radial 162 sont ainsi associées à un verrou 112. Les rainures de guidage 160 associées à chaque verrou 112 sont géométriquement portées par un plan de guidage P160.

Le plan de guidage P160 et l'axe d'emmanchement A100 forment entre eux un angle d'inclinaison α160, qui est, par convention, considéré comme étant égal à 90° - degrés -lorsque le plan de guidage P160 est orthogonal à l'axe d'emmanchement A100, et comme étant égal à 0° lorsque le plan de guidage P160 est parallèle à l'axe d'emmanchement A100.

Chaque plan de guidage P160 est incliné par rapport à l'axe d'emmanchement A100. Par incliné, on entend que le plan de guidage P160 n'est ni parallèle, ni orthogonal à l'axe d'emmanchement A100. Autrement dit, l'angle d'inclinaison α160 n'est ni nul ni égal à 90°.

Ici, chaque plan de guidage P160 est incliné vers l'avant, c'est-à-dire que les rainures de guidage 160 s'éloignent de l'axe d'emmanchement A100 à mesure qu'elles se rapprochent de l'avant de l'élément femelle 100, lorsque l'élément femelle 100 est assemblé.

Lorsque l'élément femelle 100 est assemblé, chaque verrou 112 est reçu dans une ouverture radiale 110 respective et dans un passage radial 162 respectif et est guidé en translation selon l'axe radial A110. Les pions 134 sont reçus dans les rainures de guidage 160 qui sont inclinées. Ainsi, lorsque la bague de manoeuvre 150, solidaire de la bague intérieure 152, est déplacée vers l'avant de l'élément femelle 100, chaque verrou 112 est rapproché de l'axe d'emmanchement A100, jusqu'à ce que les pions 134 arrivent en butée contre le fond 164 de la rainure de guidage 160 correspondante. Ici, la position avant de la bague de manoeuvre 150 est donc une position de verrouillage de la bague de manoeuvre 150, le ressort de compression 158 étant agencé pour repousser la bague de manoeuvre 150 vers sa position de verrouillage.

À l'inverse, lorsque la bague de manoeuvre 150 est déplacée vers l'arrière de l'élément femelle 100, chaque verrou 112 est éloigné de l'axe d'emmanchement A100 par les pions 134 qui coulissent dans les rainures de guidage 160, en s'éloignant de leurs fonds respectifs 164. Ici, la position arrière de la bague de manoeuvre 150 est donc une position de déverrouillage de la bague de manoeuvre 150.

Autrement dit, la position de déverrouillage de la bague de manoeuvre 150 est une position axialement reculée, le long de l'axe d'emmanchement A100, par rapport à la position de verrouillage.

On comprend que la transmission des efforts entre la bague de manoeuvre 150 et les verrous 112 dépend de l'angle d'inclinaison α160.

Lorsque l'angle d'inclinaison α160 est supérieur à 60°, la manoeuvre de la bague de manoeuvre 150 devient difficile, ce qui n'est pas souhaitable.

À l'inverse, lorsque l'angle d'inclinaison α160 est inférieur à 30°, la manoeuvre de la bague de manoeuvre 150 est aisée. Cependant la course axiale de la bague de manoeuvre 150 entre sa position de verrouillage et sa position de déverrouillage augmente, ce qui n'est pas souhaitable non plus car l'élément femelle 100 est alors plus encombrant.

En pratique, l'angle d'inclinaison α160 est compris entre 30° et 60°, de préférence compris entre 40° et 50°, de préférence encore égal à 45°.

L'élément femelle 100 comprend avantageusement une soupape 170, qui est logée dans le passage fluidique V100. La soupape 170 est mobile en translation selon l'axe d'emmanchement A100 entre une position de fermeture, dans laquelle la soupape 170 est en butée contre un siège 172 ménagé dans le corps 102 de l'élément mâle 100 et obture le passage fluidique V100, et une position d'ouverture, dans laquelle la soupape 170 n'obture pas le passage fluidique V100. Sur la figure 1, la soupape 170 est représentée en position de fermeture.

L'élément femelle 100 comprend aussi un ressort 174, qui agit entre une face arrière de la soupape 170 et une face du corps 102 située en regard et tournée vers l'avant de l'élément femelle 100. Le ressort 174 rappelle par défaut la soupape 170 vers sa position de fermeture.

La soupape 170 comprend, du côté de l'embouchure 108, une deuxième face d'appui 176. La soupape 170 est ainsi configurée pour passer de sa position de fermeture à sa position d'ouverture, lorsqu'un effort supérieur à l'effort de rappel du ressort 174 est exercé sur la deuxième face d'appui 176.

Lorsque l'élément mâle 10 est reçu dans le volume de réception V100 de l'élément femelle 100, la deuxième face d'appui 176 est en appui sur la première face d'appui 56.

On décrit à présent le fonctionnement du raccord R.

Sur la figure 1, l'embouchure 22 de l'élément mâle 10 est placée en regard de l'embouchure 108 de l'élément femelle 100, l'axe principal A10 étant aligné avec l'axe d'emmanchement A100. La soupape 50 de l'élément mâle 10 et la soupape 170 de l'élément femelle 100 sont chacune en position de fermeture.

Sous l'effet du ressort 158, la bague de manoeuvre 150 est repoussée dans sa position de verrouillage. Les verrous 112, guidés par les rainures de guidage 160, sont alors dans leur première position.

Après avoir retiré le capuchon 12 de l'élément mâle 10, un opérateur rapproche l'élément mâle 10 de l'élément femelle 100 suivant un mouvement d'emmanchement F1, qui est un mouvement de translation parallèle à l'axe d'emmanchement A100.

Alors que le mouvement d'emmanchement se poursuit, la partie distale 20 de l'élément mâle 10 est reçue dans le volume de réception V100 de l'élément femelle 100.

La première face d'appui 56 vient en appui contre la deuxième face d'appui 176. Alors que le mouvement d'emmanchement se poursuit, les deux soupapes 50 et 170 se repoussent mutuellement vers leur position d'ouverture respective, à l'encontre des ressorts 54 et 174. Le passage fluidique V10 de l'élément mâle 10 est alors fluidiquement connecté au passage fluidique V100 de l'élément femelle 100.

En parallèle de l'ouverture des soupapes 50 et 170, au cours du mouvement d'emmanchement, la collerette 30 repousse les verrous 112 de leur première position vers leur deuxième position. Plus précisément, la face avant 32 de la collerette 30, qui est divergente vers l'arrière de l'élément mâle 10, coopère avec la portion évasée 128 des verrous 112, de manière à repousser chaque verrou 112 vers sa deuxième position, suivant un mouvement de translation parallèle à l'axe radial A110 des ouvertures 110.

Alors que les verrous 112 se déplacent de leur première position vers leur deuxième position, les pions 134, qui coopèrent avec les rainures de guidage 160, repoussent la bague de manoeuvre 150 de sa position de verrouillage vers sa position de déverrouillage. Lorsque les verrous 112 sont dans leur deuxième position, la bague de manoeuvre 150 est dans sa position de déverrouillage.

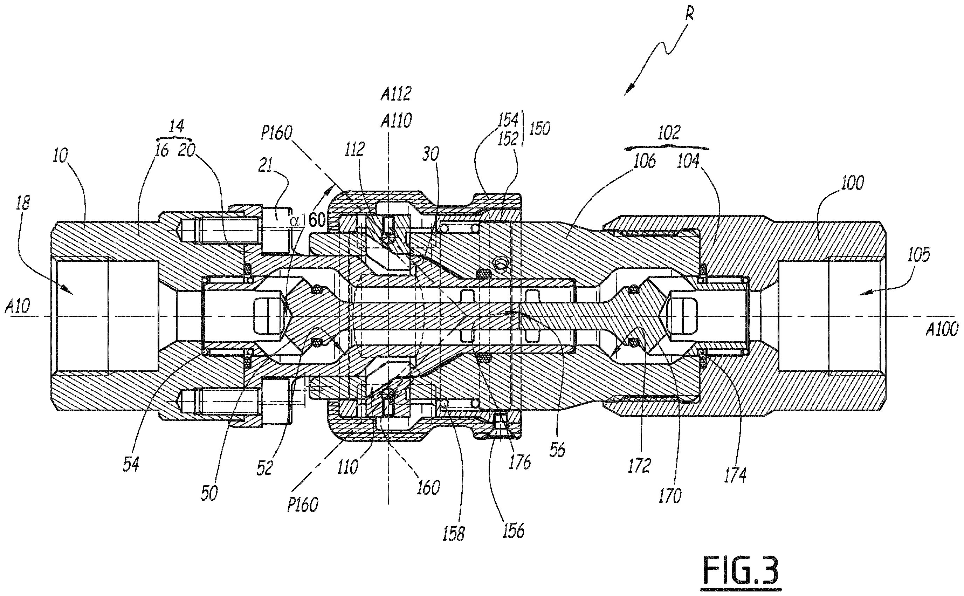

Alors que le mouvement d'emmanchement se poursuit, chacune des soupapes 50 ou 170 arrive en butée dans le corps 14 ou 102 respectif. Le raccord R se trouve alors dans la configuration de pré-verrouillage, illustrée sur la figure 3, dans laquelle l'élément mâle 10 est complètement emmanché dans l'élément femelle 100, et la bague de manoeuvre 150 est en position de déverrouillage.

Dans cette configuration de pré-verrouillage, la collerette 30 ne repousse plus les verrous 112. Les mouvements des verrous 112 selon l'axe radial 110 sont alors imposés par la bague de manoeuvre 150. Sous l'effet du ressort de compression 158, la bague de manoeuvre 150 est repoussée de sa position de déverrouillage vers sa position de verrouillage, entraînant les verrous 112 de leur deuxième position vers leur première position.

Une fois que les verrous 112 sont dans leur première position, la première face externe 40 de la collerette 30 est en regard de la deuxième face externe 144 du verrou 112, tandis que la première face interne 44 de la collerette 30 est en regard de la deuxième face interne 149 du verrou 112.

Sous l'effet des ressorts 54 et 174 des soupapes 50 et 170, l'élément mâle 10 et l'élément femelle 100 sont éloignés l'un de l'autre selon un mouvement de recul. La première face externe 40 de la collerette 30 est alors reçue dans la deuxième rainure 145 de chaque verrou 112, tandis que la deuxième face interne 149 de chaque verrou est reçue dans la première rainure 42 de la collerette 30.

La deuxième rainure 145 est ici moins profonde que la première rainure 42 ménagée dans la face arrière 34 de la collerette 30. Le mouvement de recul continue jusqu'à ce que la première face externe 40 de la collerette 30 vienne en appui sur la deuxième face externe 144. Le raccord rapide R est alors dans sa configuration connectée, illustrée sur la figure 4.

La première face de sûreté 148, appartenant au verrou 112, est alors en regard de la deuxième face de sûreté 48 de la collerette 30.

La coopération de la première face de sûreté 148 avec la deuxième face de sûreté 48 empêche les verrous 112 de passer de leur première position vers leur deuxième position, autrement dit réalise un verrouillage de sécurité du raccord rapide R, en plus du verrouillage réalisé par la bague de manoeuvre 150.

Lorsque le raccord rapide R est en configuration connectée, les mouvements de la bague de manoeuvre 150 sont empêchés. De plus, lorsque le raccord rapide R est traversé par un fluide sous pression, la pression de ce fluide tend à éloigner l'élément mâle 10 de l'élément femelle 100 selon le mouvement de recul, autrement dit tend à maintenir le raccord rapide R en configuration connectée, avec les verrous 112 en prise avec la collerette 30.

En variante non représentée, la face proximale 118 des verrous 112 ne présentent pas de rainure 145, c'est-à-dire que la face proximale 118 est plane, de même que la face arrière 34 de la collerette 30 de l'élément mâle 10. Le raccord R ainsi constitué ne présente pas la sécurité à la déconnexion mais dispose d'une surface de contact entre les verrous et la face arrière de la collerette très étendue. Lorsque le raccord R est parcouru par un fluide sous très haute pression, l'effort de répulsion entre l'élément mâle et l'élément femelle ne génère pas de pression de contact importante susceptible d'entraîner une usure prématurée des verrous ou de la collerette de l'élément mâle.

Pour déconnecter l'un de l'autre l'élément mâle 10 de l'élément femelle 100, l'utilisateur rapproche, au cours d'une première phase, l'élément mâle 10 de l'élément femelle 100 selon le mouvement d'emmanchement, jusqu'à ce que les première et deuxième faces de sûreté 148 et 48 ne soient plus en regard l'une de l'autre. Dans l'exemple illustré, cette configuration correspond au moment où les soupapes 50 et 170 sont chacune en butée arrière, comme sur la figure 3.

Les mouvements des verrous 112 selon l'axe radial A110 sont alors commandés par la bague de manoeuvre 150. Au cours d'une deuxième phase, l'utilisateur déplace la bague de manoeuvre 150 de sa position de verrouillage vers sa position de déverrouillage, déplaçant ainsi les verrous de leur première position vers leur deuxième position. Le raccord rapide R se retrouve alors dans la configuration de pré-verrouillage de la figure 3, dans laquelle la face proximale 118 des verrous 112 n'est plus en regard de la face arrière 34 de la collerette 30. Au cours d'une troisième phase, l'utilisateur éloigne l'un de l'autre l'élément mâle 10 et l'élément femelle 100 selon l'axe d'emmanchement A100, ce mouvement étant aidé par les ressorts 154 et 174 des soupapes 50 et 170. Au cours de ce mouvement d'éloignement, chacune des soupapes 50 et 170 revient en appui sur le siège 52 ou 172 correspondant, obturant les passages fluidiques V10 ou V100 respectifs.

La cinématique élaborée du déverrouillage du raccord R en trois phases distinctes réduit les risques de déconnexion intempestive de la part de l'utilisateur. En particulier, lorsque le raccord rapide R est traversé par un fluide sous pression, l'utilisateur constate, au cours de la première phase, que la force nécessaire pour rapprocher l'un de l'autre l'élément mâle 10 de l'élément femelle 100 est supérieure à la force nécessaire en l'absence de pression, ce qui alerte l'utilisateur de la présence de pression, ceci en toute sécurité car l'utilisateur n'a pas encore déplacé la bague de manoeuvre 150.

Lorsque la pression à l'intérieur du raccord R est élevée, l'utilisateur ne peut pas, avec sa seule force musculaire, effectuer le mouvement de rapprochement de la première phase. Ceci empêche une déconnexion sous pression du raccord R.

Dans les deuxième à quatrième modes de réalisation, les éléments analogues à ceux du premier mode de réalisation portent les mêmes références et fonctionnent de la même façon. Dans ce qui suit, on décrit principalement les différences entre chaque mode de réalisation et le ou les précédents.

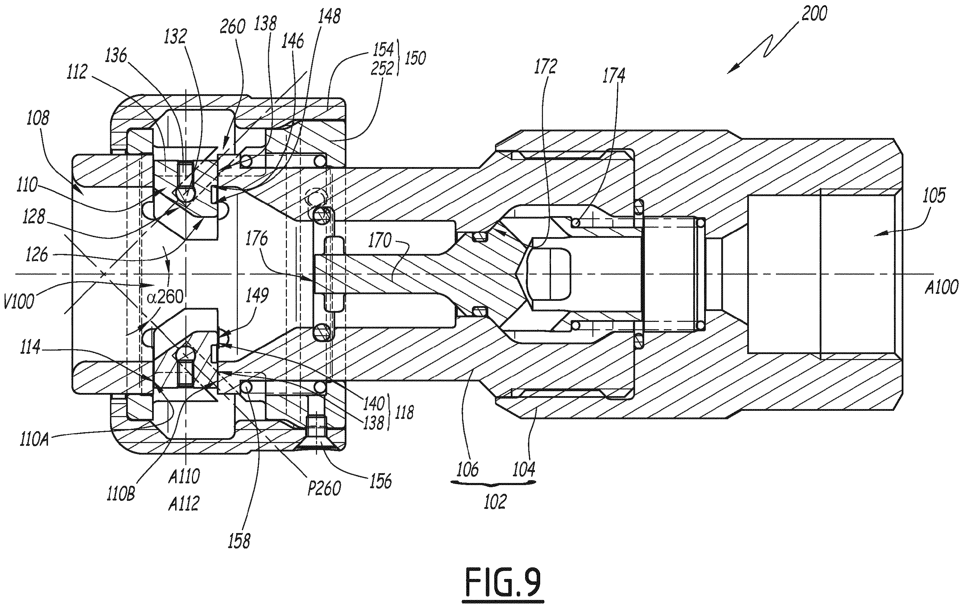

Un élément femelle 200 conforme au deuxième mode de réalisation de l'invention est représenté sur les figures 9 à 11. Alors que dans le premier mode de réalisation l'élément femelle 100 comprend une bague intérieure 152 avec des rainures de guidages 160 inclinées vers l'avant de l'élément femelle 100, une des principales différences du deuxième mode de réalisation avec le premier mode est que l'élément femelle 200 comprend une bague intérieure 252 qui comprend des rainures de guidage 260 qui sont inclinées vers l'arrière de l'élément femelle 200. Autrement dit, les rainures de guidage 260 se rapprochent de l'axe d'emmanchement A100 à mesure qu'elles se rapprochent de l'avant de l'élément femelle 200.

Lorsque l'élément femelle 200 est assemblé, chaque verrou 112 est reçu dans une ouverture radiale 110 respective et dans un passage radial 162 respectif et est guidé en translation selon l'axe radial A110. Les pions 134 formant les extrémités de la tige 132 sont reçues dans les rainures de guidage 260. Les rainures de guidage 260 associées à une même ouverture radiale 110 sont alignées sur un plan de guidage P260, qui est incliné vers l'arrière par rapport à l'axe d'emmanchement A100. Chaque plan de guidage P260 forme avec l'axe d'emmanchement un angle d'inclinaison α260 qui n'est ni nul ni égal à 90°.

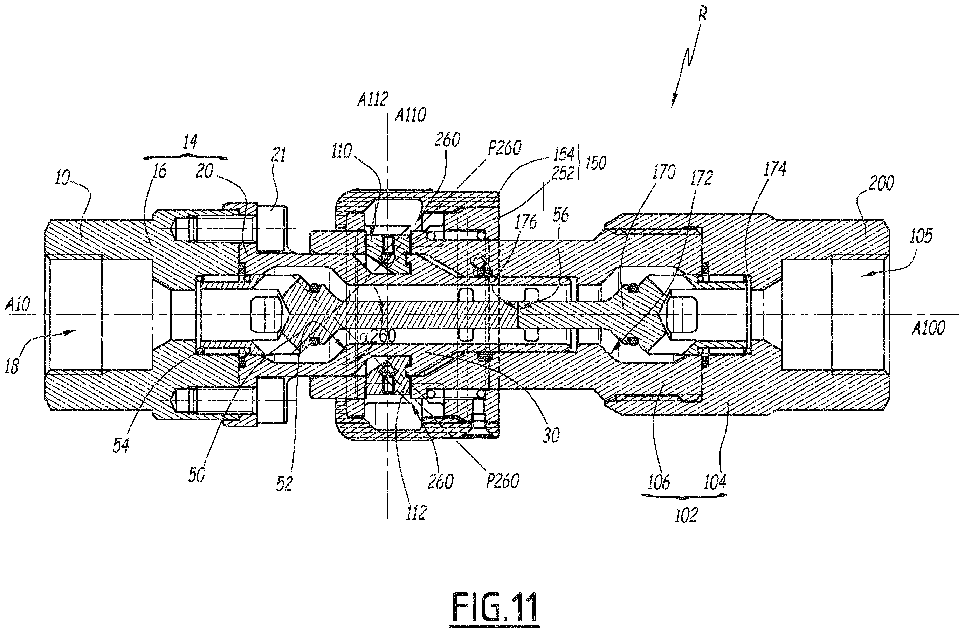

Ainsi, lorsque la bague de manoeuvre 150 est déplacée vers l'arrière de l'élément femelle 200, chaque verrou 112 est rapproché de l'axe d'emmanchement A100, jusqu'à ce que les tiges 132 arrivent en butée contre le fond 164 de la rainure de guidage 260 correspondante. Les verrous 112 sont alors dans leur première position, et la bague de manoeuvre 150 est dans sa position de verrouillage. L'élément femelle 200 est alors dans une configuration de verrouillage, comme sur les figures 9 et 11. Le ressort de compression 158 est agencé pour repousser la bague de manoeuvre 150 dans sa position de verrouillage.

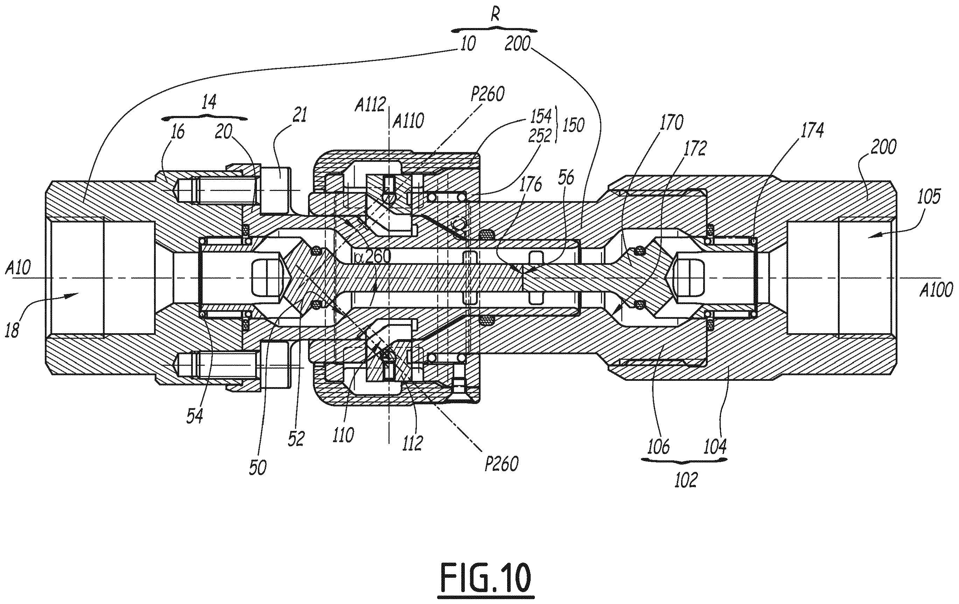

À l'inverse, lorsque la bague de manoeuvre 150 est déplacée vers l'avant de l'élément femelle 200, chaque verrou 112 est éloigné de l'axe d'emmanchement A100. Les verrous 112 sont alors dans leur deuxième position, et la bague de manoeuvre 150 est dans sa position de déverrouillage. Par extension, l'élément femelle 200 est alors dans une configuration de déverrouillage, illustrée sur la figure 10.

Autrement dit, la position de verrouillage de la bague de manoeuvre 250 est une position axialement reculée, le long de l'axe d'emmanchement A100, par rapport à la position de déverrouillage de la bague de manoeuvre 150.

La connexion du raccord R suit une séquence analogue à celle du premier mode de réalisation, seules les positions de verrouillage et de déverrouillage de la bague 150 étant inversées par rapport au premier mode.

Sur la figure 10, le raccord rapide R est représenté dans sa configuration de pré-verrouillage, tandis que sur la figure 11, le raccord rapide est représentée dans sa configuration connectée.

Lors de la déconnexion du raccord rapide R, dans une première phase l'utilisateur rapproche l'élément mâle 10 de l'élément femelle 200 parallèlement à l'axe d'emmanchement A100, jusqu'à ce que les première et deuxième faces de sûreté 148 et 48 ne soient plus en regard l'une de l'autre. Au cours d'une deuxième phase, l'utilisateur déplace la bague de manoeuvre 150 de sa position de verrouillage vers sa position de déverrouillage, soit ici vers l'avant de l'élément femelle 200, autrement dit vers l'élément mâle 10. Le raccord R se retrouve alors en configuration de pré-verrouillage. Enfin, au cours d'une troisième phase, l'utilisateur éloigne l'un de l'autre l'élément mâle 10 de l'élément femelle 200 suivant le mouvement de recul. Les soupapes 50 et 170 reprennent chacune leur position de fermeture.

L'élément femelle 200 du deuxième mode de réalisation reste avantageusement compatible avec l'élément mâle 10 du premier mode de réalisation.

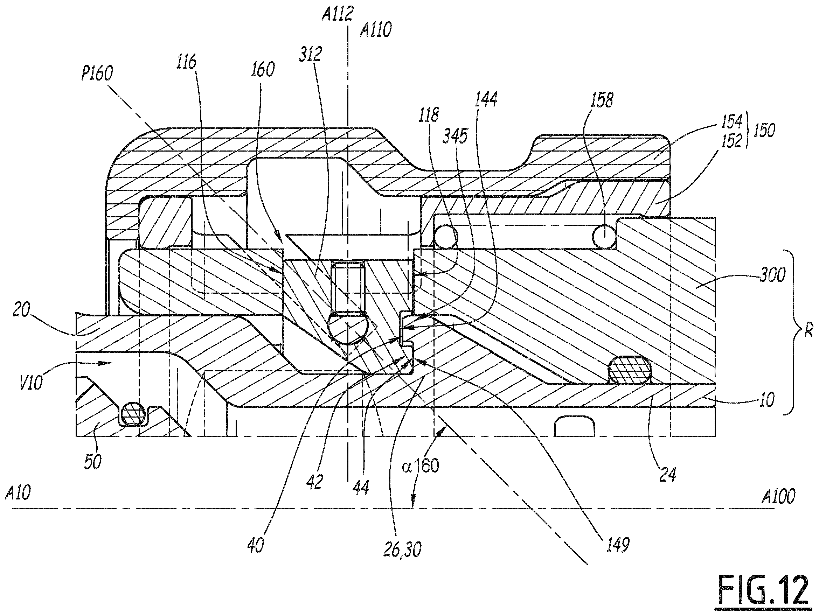

Un troisième mode de réalisation de l'invention est représenté en figure 12. Un raccord R, comprenant un élément femelle 300 conforme au troisième mode de réalisation de l'invention et un élément mâle 10, est représenté en configuration connectée sur la figure 12. Une des principales différences entre l'élément femelle 300 et l'élément femelle 100 du premier mode est qu'en configuration connectée du raccord rapide R, les verrous 112 et la collerette 30 sont en appui l'un sur l'autre par l'intermédiaire de surfaces différentes.

L'élément femelle 300 comprend deux verrous 312. Une deuxième rainure 345 est ménagée en creux dans la face proximale 118 de chaque verrou 312, de manière à ménager la deuxième surface externe 144 et la deuxième surface de sûreté 148. La deuxième rainure 345 est ici plus profonde que la première rainure 42 ménagée dans la face arrière 34 de la collerette 30. En configuration connectée du raccord rapide R, le fond 44 de la collerette 30, autrement dit la première face interne 44, est en appui sur la deuxième face interne 149 du verrou 312.

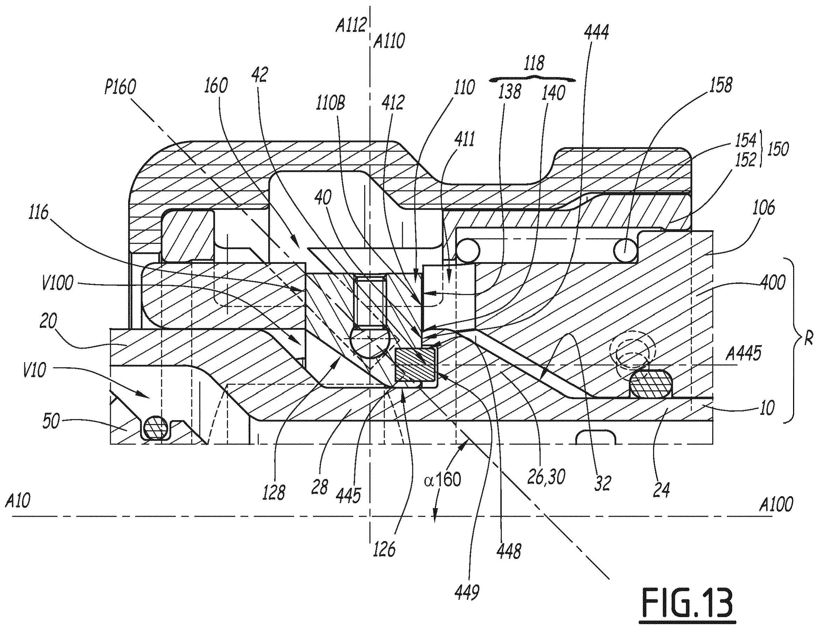

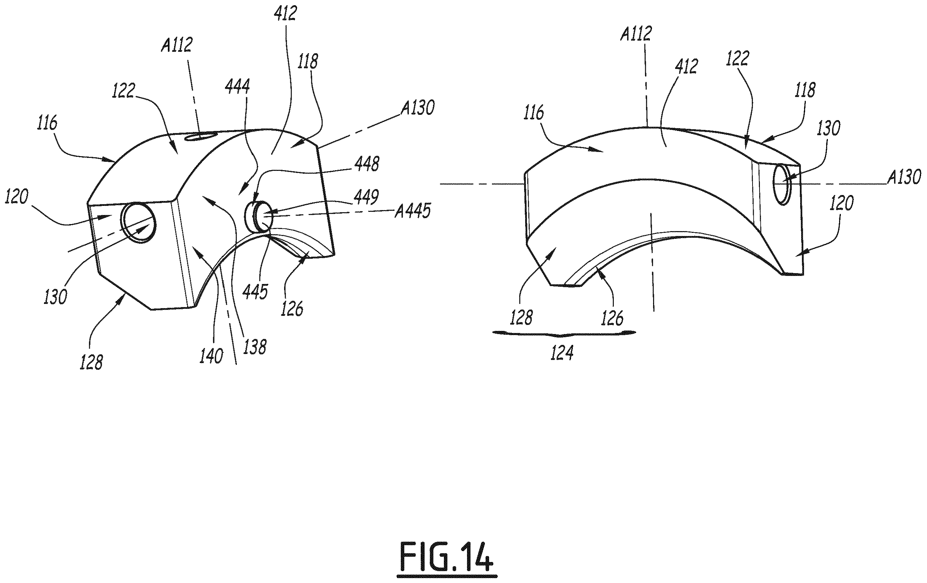

Un quatrième mode de réalisation de l'invention est représenté sur les figures 13 et 14. Un raccord R, comprenant un élément femelle 400 conforme au quatrième mode de réalisation de l'invention et un élément mâle 10, est représenté en configuration connectée sur la figure 13. Alors que dans le premier mode, chaque verrou 112 comprend une deuxième rainure 145 usinée en creux dans la face proximale 118, dans le quatrième mode, l'élément femelle 400 comprend des verrous 412, qui comprennent chacun un insert 445 qui forme une saillie par rapport à la face proximale 118.

Pour chaque verrou 412, l'insert 445 est situé dans la deuxième portion interne 140 de la face proximale 118 du verrou, l'insert 445 formant saillie par rapport à la deuxième portion externe 140. Dans l'exemple illustré, l'insert 445 est reçu dans un logement complémentaire ménagé dans la deuxième portion interne 140 de la face proximale 118.

L'insert 445 est ici réalisé au moyen d'une goupille cylindrique à section circulaire, qui s'étend selon un axe de d'insert A445, orthogonal à la face proximale 118. L'insert 445 comprend une face latérale 448 cylindrique et une face arrière 449, qui est parallèle à la face proximale 118.

Une portion de la face proximale 118, située au voisinage immédiat de l'insert 445 entre l'insert 445 et la face externe 122 du verrou 412 constitue une deuxième face externe 444 de ce verrou 412.

Lorsque le verrou 412 est reçu dans l'ouverture radiale 110 correspondante, chaque insert 445 s'étend en saillie selon l'axe d'emmanchement A100 par rapport à la deuxième portion externe 140. Une rainure radiale 411 est en outre ménagée dans la face arrière 110B de chaque ouverture radiale 110, pour laisser passer l'insert 445 lors des mouvements du verrou 412 entre sa première position et sa deuxième position.

La face latérale 448 comprend une portion qui est orientée à l'opposé de l'axe d'emmanchement A100, cette portion constituant une deuxième face de sûreté pour le verrou 412. La face arrière 449, orienté du côté opposé de l'embouchure 108, constitue une deuxième face interne pour le verrou 412.

Lorsque le raccord R est en configuration connectée, l'insert 445 est reçu dans la première rainure 42 de la collerette 30. La face arrière 449 de l'insert 445, autrement dit la deuxième face interne du verrou 412, est située en regard de la première face interne 44 de la collerette, tandis que la face latérale 448 est en regard de la première face de sûreté 48 de la collerette 30, et que la deuxième face externe 444 est en regard de la première face externe 40 de la collerette 30.

Un tel verrou 412 comprenant l'insert 445 est plus facile et économique à réaliser que les verrous 112 ou 312 des modes de réalisation précédents, dans lesquels les deuxièmes rainures 145 ou 345 sont usinées, par exemple par fraisage.

Les modes de réalisation et les variantes mentionnées ci-dessus peuvent être combinés entre eux pour générer de nouveaux modes de réalisation de l'invention.

## Revendications

1. Élément femelle (100 ; 200 ; 300 ; 400) de raccord rapide (R), configuré pour se connecter à un élément mâle (10), l'élément femelle comprenant :
- un corps (102), qui s'étend selon un axe d'emmanchement (A100) et qui comprend :
• un volume de réception (V100) de l'élément mâle (10), le volume de réception présentant une forme de révolution autour de l'axe d'emmanchement et débouchant du corps par une première embouchure (108), qui est située dans un plan transversal orthogonal à l'axe d'emmanchement (A100), l'embouchure définissant un côté avant de l'élément femelle,
• des ouvertures radiales (110), qui sont ménagées dans le corps selon un axe radial (A110) orthogonal à l'axe d'emmanchement et qui débouchent dans le volume de réception,
- au moins un verrou (112 ; 312 ; 412), chaque verrou étant reçu dans une ouverture radiale (110) respective et étant mobile en translation par rapport au corps suivant l'axe radial (A110) correspondant, entre une première position, dans laquelle ce verrou pénètre dans le volume de réception (V100), et une deuxième position, dans laquelle ce verrou ne pénètre pas dans le volume de réception, chaque verrou comprenant une face proximale (118) orientée du côté opposé à la première embouchure (108),
- une bague de manoeuvre (150 ; 250), disposée autour du corps (102) co-axialement à l'axe d'emmanchement (A100) et mobile en translation par rapport au corps le long de l'axe d'emmanchement, entre une position de verrouillage et une position de déverrouillage,
- un organe de rappel (158), configuré pour rappeler la bague de manoeuvre vers sa position de verrouillage,
**caractérisé en ce que** la bague de manoeuvre (150 ; 250) comprend des rainures de guidages (160 ; 260), qui coopèrent avec des pions (134) de chaque verrou (112 ; 312 ; 412) s'étendant suivant une direction (A130) orthogonale à l'axe radial (A110) de l'ouverture radiale (110) correspondante, les rainures de guidage associées à chaque verrou étant géométriquement portées par un plan de guidage (P160 ; P260) incliné par rapport à l'axe d'emmanchement (A100), de manière que :
- chaque verrou est entrainé de sa deuxième position vers sa première position lorsque la bague de manoeuvre est déplacée de sa position de déverrouillage vers sa position de verrouillage, et
- chaque verrou est entrainé de sa première position vers sa deuxième position lorsque la bague de manoeuvre est déplacée de sa position de verrouillage vers sa position de déverrouillage.

2. Élément femelle (100 ; 300 ; 400) selon la revendication 1, dans lequel les rainures de guidage (160) s'éloignent de l'axe d'emmanchement (A100) à mesure qu'elles se rapprochent de l'avant de l'élément femelle, la position de déverrouillage de la bague de manoeuvre (150) étant une position axialement reculée, le long de l'axe d'emmanchement, par rapport à la position de verrouillage.

3. Élément femelle (200) selon la revendication 1, dans lequel les rainures de guidage (260) se rapprochent de l'axe d'emmanchement (A100) à mesure qu'elles se rapprochent de l'avant de l'élément femelle, la position de verrouillage de la bague de manoeuvre (250) étant une position axialement reculée, le long de l'axe d'emmanchement, par rapport à la position de déverrouillage.

4. Élément femelle (100 ; 200 ; 300 ; 400) selon l'une quelconque des revendications précédentes, dans lequel chaque plan de guidage (P160 ; P260) est incliné par rapport à l'axe d'emmanchement (A100) d'un angle d'inclinaison (α160 ; α260) compris entre 30° et 60°, de préférence compris entre 40° à 50°, de préférence encore égal à 45°.

5. Élément femelle (100 ; 200 ; 300 ; 400) selon l'une quelconque des revendications précédentes, dans lequel la face proximale (118) de chaque verrou (112 ; 312 ; 412) est essentiellement plane et parallèle à un plan transversal, la face proximale étant en appui surfacique sur une face arrière (110B) de l'ouverture radiale (110) correspondante.

6. Élément femelle (100 ; 200 ; 300 ; 400) selon la revendication 5, dans lequel une largeur (L118) de la face proximale (118) de chaque verrou (112 ; 312 ; 412), égale à la longueur de la projection sur le plan transversal (P101) de la face proximale (118) de ce verrou, mesurée suivant une direction orthoradiale à l'axe d'emmanchement (A100), est supérieure à un rayon (R108) de l'embouchure (108).

7. Elément femelle (100 ; 200 ; 300 ; 400) selon l'une quelconque des revendications précédentes, dans lequel chaque verrou (112) comprend une face interne (124), orientée vers l'axe d'emmanchement (A100), comprenant une portion évasée (128) orientée à la fois vers l'axe d'emmanchement A100 et vers l'embouchure (108).

8. Raccord rapide (R), comprenant un élément femelle (100 ; 200 ; 300 ; 400) selon l'une quelconque des revendications 1 à 7, et un élément mâle (10) configuré pour être connecté à cet élément femelle, dans lequel :
- l'élément mâle (10) comprend un corps (14) creux avec une forme globalement de révolution autour d'un axe principal (A10), le corps creux comprenant une portion distale (20) qui est destinée à être reçue dans le volume de réception (V100) de l'élément femelle, le corps de l'élément mâle (10) délimitant un passage fluidique (V10), qui débouche de la portion distale par une deuxième embouchure (22), la deuxième embouchure définissant un côté avant de l'élément mâle,
- la portion distale comprend, à mesure que l'on s'éloigne de la deuxième embouchure, une première portion cylindrique (24), une portion évasée (26), notamment conique, et une deuxième portion cylindrique (28), la portion évasée étant ménagée en saillie par rapport à la première portion cylindrique et à la deuxième portion cylindrique,
- la portion évasée forme une collerette (30) avec une face avant (32) et une face arrière (34), parmi lesquelles :
• la face avant est orientée vers la deuxième embouchure (22) et diverge à mesure que l'on s'éloigne de la deuxième embouchure, la face avant étant configurée pour repousser chaque verrou (112 ; 312 ; 412) de sa première position vers sa deuxième position lorsque l'élément mâle (10) pénètre dans l'élément femelle, au cours d'un mouvement d'emmanchement (F1) de l'élément mâle dans le volume de réception (V100) de l'élément femelle,
• la face arrière, relie la face avant à la deuxième portion cylindrique et est orientée à l'opposé de la deuxième embouchure (22),
- lorsque le raccord rapide (R) est dans une configuration connectée, dans laquelle l'élément mâle (10) est reçu dans le volume de réception de l'élément femelle, l'axe d'emmanchement (A100) est confondu avec l'axe principal (A10), la bague de manoeuvre (150 ; 250) est en position de verrouillage et chaque verrou est dans sa première position, la face arrière de la collerette (30) est en regard de la face proximale (118) de chaque verrou.

9. Raccord rapide (R) selon la revendication précédente, dans lequel :
- la face arrière (34) de la collerette (30) comprend :
• une première portion externe (36) et une première portion interne (38), qui est radialement plus proche de l'axe principal (A10) que la première portion externe et qui relie la portion externe à la deuxième portion cylindrique (28),
• la première portion externe définit une première face externe (40) de forme annulaire centrée sur l'axe principal et située dans un plan orthogonal à l'axe principal,
• la première portion interne (38) comprend une première rainure (42), qui est ménagée en creux dans la première portion interne et qui comprend un fond (44) et deux bords radiaux (46, 48) en regard l'un de l'autre,
• le fond (44) de la première rainure définit une première face interne, de forme annulaire centrée sur l'axe principal et située dans un plan orthogonal à l'axe principal,
• celui des deux bords radiaux (48) qui relie la première face interne (44) et la première face externe (40) définit une première face de sûreté, qui est géométriquement portée par un cylindre de section circulaire centré sur l'axe principal et qui est orientée vers l'axe principal,
- la face proximale (118) de chaque verrou (112 ; 312 ; 412) présente un profil complémentaire de la face arrière (34) de la collerette (30) et comprend une deuxième face externe (144 ; 444), une deuxième face interne (149 ; 449) et une deuxième face de sûreté (148 ; 448), parmi lesquelles :
• la deuxième face externe (144 ; 444) présente une forme de portion d'anneau centré sur l'axe d'emmanchement et situé dans un plan orthogonal à l'axe d'emmanchement,
• la deuxième face interne (149 ; 449) est située dans un plan orthogonal à l'axe d'emmanchement et en retrait de la deuxième face externe par rapport à l'embouchure (108) de l'élément femelle (100 ; 200 ; 300 ; 400),
• la deuxième face de sûreté (148 ; 448) est située entre la deuxième face externe et la deuxième face interne et est orientée à l'opposé de l'axe d'emmanchement,
- lorsque le raccord rapide (R) est dans sa configuration connectée :
• la première face externe (40) est en regard de la deuxième face externe (144 ; 444),
• la première face interne (44) est en regard de la deuxième face interne (149 ; 449),
• lorsque l'une parmi la première face externe ou la première face interne est en appui sur, respectivement, la deuxième face externe ou sur la deuxième face interne située en regard, alors la première face de sûreté (48) est en regard de la deuxième face de sûreté (148 ; 448), empêchant les verrous de passer de leur première position vers leur deuxième position.

10. Raccord rapide (R) selon la revendication 9, dans lequel, pour chaque verrou (112),
- une deuxième rainure (145) est ménagée en creux dans la deuxième portion interne (140) de la face proximale (118), la deuxième rainure comprenant un fond (144) et deux bords radiaux (146, 148) situés en regard l'un de l'autre, le fond de la rainure présentant une forme de portion d'anneau centrée sur l'axe d'emmanchement (A100) lorsque le verrou est en première position, tandis que les deux bords présentent chacun une forme de portion de cylindre de section circulaire centrée sur un axe parallèle à l'axe d'emmanchement,
- le fond définit la deuxième face interne, tandis que celui des deux bords radiaux (148) qui est orienté à l'opposé de l'axe d'emmanchement définit la deuxième face de sûreté, et
- lorsque le raccord rapide (R) est dans une configuration connectée, la deuxième face externe (144) est en appui sur la première face externe (40).

11. Raccord rapide (R) selon la revendication 9, dans lequel, pour chaque verrou (312) :
- une deuxième rainure (345) est ménagée en creux dans la deuxième portion interne (140) de la face proximale (118), la deuxième rainure comprenant un fond (144) et deux bords radiaux (146 ; 148) situés en regard l'un de l'autre, le fond de la rainure présentant une forme de portion d'anneau centrée sur l'axe d'emmanchement (A100) lorsque le verrou est en première position, tandis que les deux bords présentent chacun une forme de portion de cylindre de section circulaire centrée sur un axe parallèle à l'axe d'emmanchement,
- le fond définissant la deuxième face interne, tandis que celui des deux bords radiaux (148) qui est orienté à l'opposé de l'axe d'emmanchement définit une deuxième face de sûreté,
- lorsque le raccord rapide (R) est dans une configuration connectée, la deuxième face interne (149) est en appui sur la première face interne (44).

12. Raccord rapide (R) selon la revendication 9, dans lequel, pour chaque verrou (412) :
- un insert (445) est situé dans la deuxième portion interne (140) de la face proximale (118) du verrou, l'insert formant saillie par rapport à la deuxième portion externe,
- l'insert présente une face latérale (448), orientée à l'opposé de l'axe d'emmanchement (A100), et une face arrière (449), orienté du côté opposé de l'embouchure (108) de l'élément femelle (400),
- la face latérale (448) de l'insert (445) est la deuxième face de sûreté du verrou, tandis que la face arrière (449) de l'insert est la deuxième face interne du verrou.

## Patentansprüche

1. Buchse (100; 200; 300; 400) eines Schnellanschlusses (R), die dazu ausgelegt ist, dass sie mit einem Stecker (10) verbindbar ist, wobei die Buchse umfasst:
- einen Körper (102), der sich gemäß einer Steckachse (A100) erstreckt und der umfasst:
• ein Aufnahmevolumen (V100) für den Stecker (10), wobei das Aufnahmevolumen eine Rotationsform um die Steckachse aufweist und mittels einer ersten Mündung (108), die in einer Querebene orthogonal zur Steckachse (A100) liegt, aus dem Körper ausmündet, wobei die Mündung eine Vorderseite der Buchse definiert,
• radiale Öffnungen (110), die im Körper gemäß einer radialen Achse (A110) orthogonal zur Steckachse eingerichtet sind und die in das Aufnahmevolumen ausmünden,
- mindestens einen Riegel (112; 312; 412), wobei jeder Riegel in einer jeweiligen radialen Öffnung (110) aufgenommen ist und in Bezug auf den Körper gemäß der entsprechenden radialen Achse (A110) zwischen einer ersten Position, in der dieser Riegel in das Aufnahmevolumen (V100) eindringt, und einer zweiten Position, in der dieser Riegel nicht in das Aufnahmevolumen eindringt, translatorisch bewegbar ist, wobei jeder Riegel eine proximale Fläche (118) umfasst, die zu der der ersten Mündung (108) abgewandten Seite ausgerichtet ist,
- einen Betätigungsring (150; 250), der um den Körper (102) herum koaxial zur Steckachse (A100) angeordnet und in Bezug auf den Körper entlang der Steckachse zwischen einer Verriegelungsposition und einer Entriegelungsposition translatorisch beweglich ist,
- ein Rückstellelement (158), das derart ausgelegt ist, dass es den Betätigungsring in seine Verriegelungsposition zurückstellt,
**dadurch gekennzeichnet, dass** der Betätigungsring (150; 250) Führungsnuten (160; 260) umfasst, die mit Stiften (134) jedes Riegels (112; 312; 412) zusammenwirken, die sich gemäß einer Richtung (A130) orthogonal zu der radialen Achse (A110) der entsprechenden radialen Öffnung (110) erstrecken, wobei die jedem Riegel zugeordneten Führungsnuten geometrisch von einer Führungsebene (P160; P260) getragen werden, die in Bezug auf die Steckachse (A100) geneigt ist, so dass:
- jeder Riegel aus seiner zweiten Position in seine erste Position getrieben wird, wenn der Betätigungsring aus seiner Entriegelungsposition in seine Verriegelungsposition bewegt wird, und
- jeder Riegel aus seiner ersten Position in seine zweite Position getrieben wird, wenn der Betätigungsring aus seiner Verriegelungsposition in seine Entriegelungsposition bewegt wird.

2. Buchse (100; 300; 400) nach Anspruch 1, wobei sich die Führungsnuten (160) von der Steckachse (A100) entfernen, je weiter sie sich der Vorderseite der Buchse nähern, wobei die Entriegelungsposition des Betätigungsrings (150) eine entlang der Steckachse in Bezug auf die Verriegelungsposition axial zurückversetzte Position ist.

3. Buchse (200) nach Anspruch 1, wobei sich die Führungsnuten (260) der Steckachse (A100) nähern, je weiter sie sich der Vorderseite der Buchse nähern, wobei die Verriegelungsposition des Betätigungsrings (250) eine entlang der Steckachse in Bezug auf die Entriegelungsposition axial zurückversetzte Position ist.

4. Buchse (100; 200; 300; 400) nach einem der vorhergehenden Ansprüche, wobei jede Führungsebene (P160; P260) in Bezug auf die Steckachse (A100) in einem Neigungswinkel (α160; α260) zwischen 30° und 60°, vorzugsweise zwischen 40° und 50°, weiter bevorzugt von gleich 45°, geneigt ist.

5. Buchse (100; 200; 300; 400) nach einem der vorhergehenden Ansprüche, wobei die proximale Fläche (118) jedes Riegels (112; 312; 412) im Wesentlichen eben und parallel zu einer Querebene ist, wobei die proximale Fläche an einer hinteren Fläche (110B) der entsprechenden radialen Öffnung (110) flächig anliegt.

6. Buchse (100; 200; 300; 400) nach Anspruch 5, wobei eine Breite (L118) der proximalen Fläche (118) jedes Riegels (112; 312; 412), die gleich der Länge der Projektion auf die Querebene (P101) der proximalen Fläche (118) dieses Riegels ist, gemessen in einer Richtung orthoradial zur Steckachse (A100), größer als ein Radius (R108) der Mündung (108) ist.

7. Buchse (100; 200; 300; 400) nach einem der vorhergehenden Ansprüche, wobei jeder Riegel (112) eine Innenfläche (124) umfasst, die zur Steckachse (A100) ausgerichtet ist, umfassend einen aufgeweiteten Abschnitt (128), der sowohl zur Steckachse A100 als auch zur Mündung (108) ausgerichtet ist.

8. Schnellanschluss (R), umfassend eine Buchse (100; 200; 300; 400) nach einem der Ansprüche 1 bis 7 und einen Stecker (10), der derart ausgelegt ist, dass er mit dieser Buchse verbindbar ist, wobei:
- der Stecker (10) einen Hohlkörper (14) mit einer allgemeinen Rotationsform um eine Hauptachse (A10) umfasst, wobei der Hohlkörper einen distalen Abschnitt (20) umfasst, der zur Aufnahme im Aufnahmevolumen (V100) der Buchse bestimmt ist, wobei der Körper des Steckers (10) einen Fluiddurchgang (V10) begrenzt, der von dem distalen Abschnitt durch eine zweite Mündung (22) ausmündet, wobei die zweite Mündung eine Vorderseite des Steckers definiert,
- der distale Abschnitt, je weiter man sich von der zweiten Mündung entfernt, einen ersten zylindrischen Abschnitt (24), einen aufgeweiteten, insbesondere konischen Abschnitt (26) und einen zweiten zylindrischen Abschnitt (28) umfasst, wobei der aufgeweitete Abschnitt in Bezug auf den ersten zylindrischen Abschnitt und den zweiten zylindrischen Abschnitt vorstehend eingerichtet ist,
- der aufgeweitete Abschnitt einen Kragen (30) mit einer vorderen Fläche (32) und einer hinteren Fläche (34) bildet, von denen:
• die vordere Fläche zur zweiten Mündung (22) ausgerichtet ist und mit zunehmender Entfernung von der zweiten Mündung abweicht, wobei die vordere Fläche derart ausgelegt ist, dass sie jeden Riegel (112; 312; 412) aus seiner ersten Position in die zweite Position zurückdrückt, wenn der Stecker (10) während einer Einsteckbewegung (F1) des Steckers in das Aufnahmevolumen (V100) der Buchse in die Buchse eindringt,
• die hintere Fläche die vordere Fläche mit dem zweiten zylindrischen Abschnitt verbindet und entgegengesetzt zur zweiten Mündung (22) ausgerichtet ist,
- wenn sich der Schnellanschluss (R) in einer verbundenen Konfiguration befindet, in der der Stecker (10) im Aufnahmevolumen der Buchse aufgenommen ist, die Steckachse (A100) mit der Hauptachse (A10) zusammenfällt, der Betätigungsring (150, 250) in Verriegelungsposition ist und jeder Riegel in seiner ersten Position ist, die hintere Fläche des Kragens (30) der proximalen Fläche (118) jedes Riegels zugewandt ist.

9. Schnellanschluss (R) nach vorhergehendem Anspruch, wobei:
- die hintere Fläche (34) des Kragens (30) umfasst:
• einen ersten äußeren Abschnitt (36) und einen ersten inneren Abschnitt (38), der radial näher an der Hauptachse (A10) als der erste äußere Abschnitt ist und der den äußeren Abschnitt mit dem zweiten zylindrischen Abschnitt (28) verbindet,
• der erste äußere Abschnitt eine erste ringförmige äußere Fläche (40) definiert, die auf der Hauptachse zentriert ist und sich in einer Ebene orthogonal zur Hauptachse befindet,
• der erste innere Abschnitt (38) eine erste Nut (42) umfasst, die in dem ersten inneren Abschnitt vertieft ist und einen Boden (44) und zwei einander zugewandte radiale Ränder (46, 48) umfasst,
• der Boden (44) der ersten Nut eine erste ringförmige innere Fläche definiert, die auf der Hauptachse zentriert ist und sich in einer Ebene orthogonal zur Hauptachse befindet,
• derjenige der beiden radialen Ränder (48), der die erste innere Fläche (44) und die erste äußere Fläche (40) verbindet, eine erste Sicherungsfläche definiert, die geometrisch von einem Zylinder mit kreisförmigem Querschnitt getragen wird, der auf der Hauptachse zentriert ist und zur Hauptachse ausgerichtet ist,
- die proximale Fläche (118) jedes Riegels (112; 312; 412) ein Profil aufweist, das komplementär zu der hinteren Fläche (34) des Kragens (30) ist und eine zweite äußere Fläche (144; 444), eine zweite innere Fläche (149; 449) und eine zweite Sicherungsfläche (148; 448) umfasst, von denen:
• die zweite äußere Fläche (144; 444) eine Form eines Ringabschnitts aufweist, der auf der Steckachse zentriert ist und sich in einer Ebene orthogonal zur Steckachse befindet,
• sich die zweite innere Fläche (149; 449) in einer Ebene orthogonal zur Steckachse befindet und von der zweiten äußeren Fläche in Bezug auf die Mündung (108) der Buchse (100; 200; 300; 400) zurückversetzt ist,
• sich die zweite Sicherungsfläche (148; 448) zwischen der zweiten äußeren Fläche und der zweiten inneren Fläche befindet und entgegengesetzt zur Steckachse ausgerichtet ist,
- wenn der Schnellanschluss (R) in seiner verbundenen Konfiguration ist:
• ist die erste äußere Fläche (40) der zweiten äußeren Fläche (144; 444) zugewandt,
• ist die erste innere Fläche (44) der zweiten inneren Fläche (149; 449) zugewandt,
• wenn entweder die erste äußere Fläche oder die erste innere Fläche an der zweiten äußeren Fläche bzw. der zugewandten zweiten inneren Fläche anliegt, dann ist die erste Sicherungsfläche (48) der zweiten Sicherungsfläche (148; 448) zugewandt, wodurch verhindert wird, dass sich die Riegel aus ihrer ersten Position in ihre zweite Position bewegen.

10. Schnellanschluss (R) nach Anspruch 9, wobei für jeden Riegel (112),
- eine zweite Nut (145) im zweiten inneren Abschnitt (140) der proximalen Fläche (118) vertieft ist, wobei die zweite Nut einen Boden (144) und zwei einander zugewandte radiale Ränder (146, 148) umfasst, wobei der Boden der Nut eine Form eines Ringabschnitts aufweist, der auf der Steckachse (A100) zentriert ist, wenn der Riegel in erster Position ist, während die beiden Ränder jeweils die Form eines Zylinderabschnitts mit kreisförmigem Querschnitt aufweisen, der auf einer Achse parallel zur Steckachse zentriert ist,
- der Boden die zweite innere Fläche definiert, während derjenige der beiden radialen Ränder (148), der entgegengesetzt zur Steckachse ausgerichtet ist, die zweite Sicherungsfläche definiert, und
- wenn der Schnellanschluss (R) in einer verbundenen Konfiguration ist, die zweite äußere Fläche (144) an der ersten äußeren Fläche (40) anliegt.

11. Schnellanschluss (R) nach Anspruch 9, wobei für jeden Riegel (312):
- eine zweite Nut (345) im zweiten inneren Abschnitt (140) der proximalen Fläche (118) vertieft ist, wobei die zweite Nut einen Boden (144) und zwei einander zugewandte radiale Ränder (146; 148) umfasst, wobei der Boden der Nut eine Form eines Ringabschnitts aufweist, der auf der Steckachse (A100) zentriert ist, wenn der Riegel in erster Position ist, während die beiden Ränder jeweils die Form eines Zylinderabschnitts mit kreisförmigem Querschnitt aufweisen, der auf einer Achse parallel zur Steckachse zentriert ist,
- der Boden die zweite innere Fläche definiert, während derjenige der beiden radialen Ränder (148), der entgegengesetzt zur Steckachse ausgerichtet ist, eine zweite Sicherungsfläche definiert,
- wenn der Schnellanschluss (R) in einer verbundenen Konfiguration ist, die zweite innere Fläche (149) an der ersten inneren Fläche (44) anliegt.

12. Schnellanschluss (R) nach Anspruch 9, wobei für jeden Riegel (412):
- sich ein Einsatz (445) in dem zweiten inneren Abschnitt (140) der proximalen Fläche (118) des Riegels befindet, wobei der Einsatz im Verhältnis zum zweiten äußeren Abschnitt vorsteht,
- der Einsatz eine Seitenfläche (448) aufweist, die entgegengesetzt zur Steckachse (A100) ausgerichtet ist, und eine hintere Fläche (449), die zur entgegengesetzten Seite der Mündung (108) der Buchse (400) ausgerichtet ist,
- die Seitenfläche (448) des Einsatzes (445) die zweite Sicherungsfläche des Riegels ist, während die hintere Fläche (449) des Einsatzes die zweite innere Fläche des Riegels ist.

## Claims

1. A female element (100; 200; 300; 400) of a quick connector (R), configured to connect to a male element (10), the female element comprising:
• a body (102), which extends along an insertion axis (A100) and comprises:
• a receiving volume (V100) for the male element (10), the receiving volume having a shape of revolution about the insertion axis and opening out of the body through a first mouthpiece (108), which is located in a transverse plane orthogonal to the insertion axis (A100), the mouthpiece defining a front side of the female element,
• radial openings (110), arranged in the body along a radial axis (A110) orthogonal to the insertion axis, which open into the receiving volume,
• at least one latch (112; 312; 412), each latch being received in a respective radial opening (110) and being movable in translation in relation to the body along the corresponding radial axis (A110), between a first position, in which this latch penetrates into the receiving volume (V100), and a second position, in which this latch does not penetrate into the receiving volume, each latch comprising a proximal face (118) oriented on the side opposite the first mouthpiece (108),
• an actuating ring (150; 250), arranged around the body (102) coaxially to the insertion axis (A100) and movable in translation between a locked position and an unlocked position, in relation to the body along the insertion axis,
• a return member (158), configured to return the actuating ring to its locked position.
**characterized in that** the actuating ring (150; 250) comprises guide grooves (160; 260), which interact with pins (134) of each latch (112; 312 ; 412) extending in a direction (A130) orthogonal to the radial axis (A110) of the corresponding radial opening (110), the guide grooves associated with each latch being geometrically carried by a guide plane (P160; P260) inclined in relation to the insertion axis (A100), so that:
- each latch is driven from its second position to its first position when the actuating ring is moved from its unlocked position to its locked position, and
- each latch is driven from its first position to its second position when the actuating ring is moved from its locked position to its unlocked position.

2. The female element (100; 300; 400) according to claim 1, wherein the guide grooves (160) move away from the insertion axis (A100) as they approach the front of the female element, the unlocked position of the actuating ring (150) being a position axially retracted from the locked position, along the insertion axis.

3. The female element (200) according to claim 1, wherein the guide grooves (260) move closer to the insertion axis (A100) as they approach toward the front of the female element, the locked position of the actuating ring (250) being an axially retracted position in relation to the unlocked position, along the insertion axis.

4. The female element (100; 200; 300; 400) according to any of the preceding claims, wherein each guide plane (P160; P260) is inclined in relation to the insertion axis (A100) by an angle of inclination (α160; α260) of between 30° and 60°, preferably between 40° and 50°, more preferably equal to 45°.

5. The female element (100; 200; 300; 400) according to any of the preceding claims, wherein the proximal face (118) of each latch (112; 312; 412) is substantially planar and parallel to a transverse plane, the proximal face surface abutting a rear face (11 OB) of the corresponding radial opening (110).

6. The female element (100; 200; 300; 400) according to claim 5, wherein a width (L118) of the proximal face (118) of each latch (112; 312; 412), equal to the length of the projection on the transverse plane (P101) of the proximal face (118) of this latch, measured in a direction orthoradial to the insertion axis (A100), is greater than a radius (R108) of the mouthpiece (108).

7. The female element (100; 200; 300; 400) according to any of the preceding claims, wherein each latch (112) comprises an inner face (124), oriented toward the insertion axis (A100), comprising a flared portion (128) oriented both toward the insertion axis A100 and toward the mouthpiece (108).

8. A quick connector (R) comprising a female element (100; 200; 300; 400) according to any of claims 1 to 7 and a male element (10), configured to be connected to said female element, wherein:
- the male element (10) comprises a hollow body (14) with a generally revolutionary shape about a main axis (A10), the hollow body comprising a distal portion (20) which is intended to be received in the receiving volume (V100) of the female element, the body of the male element (10) delimiting a fluid passage (V10), which opens out of the distal portion via a second mouthpiece (22), the second mouthpiece defining a front side of the male element,
- the distal portion comprises, a first cylindrical portion (24), a flared portion (26), in particular a conical portion and a second cylindrical portion (28) moving away from the second mouth, the flared portion being arranged so as to project in relation to the first cylindrical portion and the second cylindrical portion,
- the flared portion forms a flange (30) with a front face (32) and a rear face (34), of which:
• the front face is oriented towards the second mouthpiece (22) and diverges, moving away from the second mouth, the front face being configured to push each latch (112; 312; 412) from its first position to its second position when the male element (10) penetrates the female element, during a insertion movement (F1) of the male element into the receiving volume (V100) of the female element,
• the rear face connects the front face to the second cylindrical portion and is oriented away from the second mouthpiece (22)
- when the quick connector (R) is in a connected configuration in which the male element (10) is received in the receiving volume of the female element, the insertion axis (A100) is coincident with the main axis (A10), the actuating ring (150; 250) is in the locked position and each latch is in its first position, the rear face of the flange (30) is facing the proximal face (118) of each latch.

9. The quick connector (R) according to the preceding claim, wherein:
- the rear face (34) of the flange (30) comprises:
• a first outer portion (36) and a first inner portion (38), which is radially closer to the main axis (A10) than the first outer portion and which connects the outer portion to the second cylindrical portion (28),
• the first outer portion defines a first ring-shaped outer face (40) centered on the principal axis and located in a plane orthogonal to the principal axis,
• the first inner portion (38) comprises a first groove (42), which is recessed in the first inner portion and comprises a bottom (44) and two radial edges (46, 48) facing each other,
• the bottom (44) of the first groove defines a first ring-shaped inner face centered on the main axis and situated in a plane orthogonal to the main axis,
• the one of the two radial edges (48) that connects the first inner face (44) and the first outer face (40) defines a first security face, which is geometrically carried by a cylinder of circular cross-section centered on the main axis and which is oriented towards the main axis,
- the proximal face (118) of each latch (112; 312; 412) has a profile complementary to the rear face (34) of the flange (30) and comprises a second outer face (144; 444), a second inner face (149; 449) and a second security face (148; 448), of which:
• the second outer face (144; 444) has a ring portion shape centered on the insertion axis and located in a plane orthogonal to the insertion axis,
• the second inner face (149; 449) is located in a plane orthogonal to the insertion axis and set back from the second outer face in relation to the mouthpiece (108) of the female element (100; 200; 300; 400)
• the second security face (148; 448) is located between the second outer face and the second inner face and is oriented opposite the insertion axis,
- when the quick connector (R) is in its connected configuration:
• the first outer face (40) faces the second outer face (144; 444),
• the first inner face (44) faces the second inner face (149; 449),
• when either the first outer face or the first inner face abuts the respective second outer or inner face located opposite, then the first security face (48) is opposite the second security face (148; 448), preventing the latches from moving from their first position to their second position.

10. The quick connector (R) according to claim 9, wherein, for each latch (112),
- a second groove (145) is recessed in the second inner portion (140) of the proximal face (118), the second groove comprising a bottom (144) and two radial edges (146, 148) located opposite each other, the bottom of the groove having the ring-shaped portion centered on the insertion axis (A100) when the latch is in its first position, while the two edges each have the shape of a cylinder portion with a circular cross-section centered on an axis parallel to the insertion axis,
- the bottom defines the second inner face, while the one of the two radial edges (148) that is oriented away from the insertion axis defines the second security face, and
- when the quick connector (R) is in a connected configuration, the second outer face (144) abuts the first outer face (40).

11. The quick connector (R) according to claim 9, wherein, for each latch (312):
- a second groove (345) is recessed in the second inner portion (140) of the proximal face (118), the second groove comprising a bottom (144) and two radial edges (146; 148) located opposite each other, the bottom of the groove having the ring-shaped portion centered on the insertion axis (A100) when the latch is in the first position, while the two edges each have the shape of a cylinder portion with a circular cross-section centered on an axis parallel to the insertion axis,
- the bottom defines the second internal face, while the one of the two radial edges (148) that is oriented away from the insertion axis defines a second security face,
- when the quick connector (R) is in a connected configuration, the second inner face (149) abuts the first inner face (44).

12. The quick connector (R) according to claim 9, wherein, for each latch (412):
- an insert (445) is located in the second inner portion (140) of the proximal face (118) of the latch, the insert projecting from the second outer portion,
- the insert has a side face (448) facing away from the insertion axis (A100) and a rear face (449) facing away from the mouthpiece (108) of the female element (400),
- the side face (448) of the insert (445) is the second security face of the latch, while the rear face (449) of the insert is the second inner face of the latch.
